# EUROPEAN PATENT APPLICATION

(11) **EP 4 390 806 A1**
(43) Date of publication of application: **26.06.2024**
(21) Application number: 22858458.7
(22) Date of filing: 16.08.2022
(51) Int. Cl.: G06Q 10/083, B65G 61/00

(54) **INTEGRATED MANAGEMENT DEVICE, MANAGEMENT METHOD, SERVER, PROGRAM, AND STORAGE MEDIUM**

(30) Priority: 20.08.2021 JP 2021135131
(71) Applicant: Honda Motor Co., Ltd., Minato-ku Tokyo 107-8556 (JP)
(72) Inventor: KUDO, Jun, Wako-shi, Saitama 351-0193 (JP); SADANO, Hakaru, Wako-shi, Saitama 351-0193 (JP)
(74) Representative: Weickmann & Weickmann PartmbB
(86) International application number: PCT/JP2022/030926
(87) International publication number: WO 2023/022140

(57) **Abstract**

An integrated management apparatus includes: an acquisition unit which acquires (I) a first demand which is sent from an energy management apparatus that manages energy, and which includes an amount of demand, a demand time, and a demand position in relation to an energy demand, and (II) a second demand which is sent from a moving body management apparatus that manages a moving body, and which includes an amount of demand, a demand time, and a demand position in relation to a demand of the moving body; a processing unit which performs at least one of processing for deciding a position and a time at which the moving body moves, or processing for determining whether both demands of the first demand and the second demand can be met, based on the first demand and the second demand that are acquired by the acquisition unit; and a mode determination unit which switches between a plurality of modes which includes, as modes for managing the energy and the moving body, a first mode in which the first demand is met to an extent possible while the second demand is met, and a second mode in which the second demand is met to an extent possible while the first demand is met.

## Description

### BACKGROUND

### 1. TECHNICAL FIELD

The present invention relates to an integrated management apparatus, a management method, a server, a program, and a storage medium.

### 2. RELATED ART

Patent Document 1 discloses that "a V2G system includes: a parent aggregator which manages trade of power from a plurality of power supply sources to a power network; and a child aggregator which manages a plurality of pieces of transportation equipment, and ensures, to the parent aggregator, charge and discharge between at least one of storage batteries respectively mounted on the plurality of pieces of transportation equipment and the power network".

### PRIOR ART DOCUMENT

### PATENT DOCUMENT

Patent Document 1: Japanese Patent Application Publication No. 2018-124674

### GENERAL DISCLOSURE

A first aspect provides an integrated management apparatus. The integrated management apparatus includes an acquisition unit which acquires (I) a first demand which is sent from an energy management apparatus that manages energy, and which includes an amount of demand, a demand time, and a demand position in relation to an energy demand, and (II) a second demand which is sent from a moving body management apparatus that manages a moving body, and which includes an amount of demand, a demand time, and a demand position in relation to a demand of the moving body. The integrated management apparatus includes a processing unit which performs at least one of processing for deciding a position and a time at which the moving body moves, or processing for determining whether both demands of the first demand and the second demand can be met, based on the first demand and the second demand that are acquired by the acquisition unit. The integrated management apparatus includes a mode determination unit which switches between a plurality of modes which includes, as modes for managing the energy and the moving body, a first mode in which the first demand is met to an extent possible while the second demand is met, and a second mode in which the second demand is met to an extent possible while the first demand is met.

As a mode for managing the energy and the moving body, the mode determination unit may determine a mode to be executed in future among the plurality of modes.

As the mode for managing the energy and the moving body, the mode determination unit may determine a mode to be currently executed, regardless of a mode being executed, among the plurality of modes.

In a case where the moving body starts moving based on the position and the time at which the moving body moves and which are decided according to the mode determined by the mode determination unit, and then a predetermined emergency condition is met, the mode determination unit may determine the mode to be currently executed among the plurality of modes.

The first mode may be a mode in which the position and the time at which the moving body moves are decided to meet the second demand, and the time at which the moving body moves is adjusted to meet the first demand to the extent possible while meeting the second demand.

When the first mode is determined by the mode determination unit, the processing unit may perform processing of determining whether both demands of the first demand and the second demand can be met, by the moving body moving according to the position and the time at which the moving body moves and which are decided to meet the second demand, and in a case where it is determined that both demands of the first demand and the second demand cannot be met, the processing unit may perform processing of adjusting the time at which the moving body moves to meet the first demand to the extent possible while meeting the second demand.

The second mode may be a mode in which a moving body required to meet the first demand is selected from among the plurality of moving bodies, and in which a moving body other than the moving body selected from among the plurality of moving bodies, is caused to move to meet the second demand to the extent possible.

When the second mode is determined by the mode determination unit, the processing unit may perform processing for selecting the moving body required to meet the first demand from among the plurality of moving bodies, and processing for deciding, to meet the second demand to the extent possible, the position and the time at which the moving body other than the moving body selected from among the plurality of moving bodies, moves.

A second aspect provides a server. The server includes an acquisition unit which acquires (I) a first demand which is sent from an energy management apparatus that manages energy, and which includes an amount of demand, a demand time, and a demand position in relation to an energy demand, and (II) a second demand which is sent from a moving body management apparatus that manages a moving body, and which includes an amount of demand, a demand time, and a demand position in relation to a demand of the moving body. The server includes a processing unit which performs at least one of processing for deciding a position and a time at which the moving body moves, or processing for determining whether both demands of the first demand and the second demand can be met, based on the first demand and the second demand that are acquired by the acquisition unit. The server includes a mode determination unit which switches between a plurality of modes which includes, as modes for managing the energy and the moving body, a first mode in which the first demand is met to an extent possible while the second demand is met, and a second mode in which the second demand is met to an extent possible while the first demand is met.

A third aspect provides a management method. The management method includes acquiring a first demand which includes an amount of demand, a demand time, and a demand position in relation to an energy demand. The management method includes acquiring a second demand which includes an amount of demand, a demand time, and a demand position in relation to a demand of a moving body. The management method includes performing at least one of processing for deciding a position and a time at which the moving body moves, or processing for determining whether both demands of the first demand and the second demand can be met, based on the first demand and the second demand. The management method includes switching between a plurality of modes which includes, as modes for managing the energy and the moving body, a first mode in which the first demand is met to an extent possible while the second demand is met, and a second mode in which the second demand is met to an extent possible while the first demand is met.

A fourth aspect provides a program. The program causes a computer to function as the integrated management apparatus described above.

A fifth aspect provides a storage medium. The storage medium stores the program described above. The storage medium may be a non-transitory computer-readable storage medium.

The summary clause does not necessarily describe all necessary features of the embodiments of the present invention. The present invention may also be a sub-combination of the features described above.

### BRIEF DESCRIPTION OF THE DRAWINGS

Fig. 1 schematically shows a control system 100 according to a first embodiment.
Fig. 2 schematically shows a delivery route for an item from a business establishment 11.
Fig. 3 schematically shows a system configuration of an integrated management apparatus 51.
Fig. 4 shows execution sequences of a power control apparatus 41, the integrated management apparatus 51, and a vehicle control apparatus 61 in a normal mode.
Fig. 5 schematically shows an example of delivery information which is input by a user of the vehicle control apparatus 61.
Fig. 6 schematically shows processing in which the vehicle control apparatus 61 assigns a vehicle 181 that delivers the item, at a time of preparing a vehicle dispatch plan.
Fig. 7 shows information indicating a position of a delivery destination and the delivery route decided by the vehicle control apparatus 61 at the time of preparing the vehicle dispatch plan.
Fig. 8 schematically shows the number of items to be delivered by each vehicle 181 based on the prepared vehicle dispatch plan.
Fig. 9 shows a power charging demand and a power feeding demand in the business establishment 11 decided by the power control apparatus 41 at a time of preparing a power plan.
Fig. 10 schematically shows processing in which the integrated management apparatus 51 adjusts a delivery plan according to a power demand.
Fig. 11 schematically shows amounts of the power demand and a delivery demand which are arbitrated.
Fig. 12 shows execution sequences of the power control apparatus 41, the integrated management apparatus 51, and the vehicle control apparatus 61 when a special mode is determined.
Fig. 13 schematically shows processing in which the vehicle control apparatus 61 reassigns the vehicle 181 that delivers the item, in response to an adjustment request from the integrated management apparatus 51 in the special mode.
Fig. 14 shows areas covered by the vehicle 181.
Fig. 15 shows execution sequences of the power control apparatus 41, the integrated management apparatus 51, and the vehicle control apparatus 61 in an emergency mode.
Fig. 16 schematically shows processing in which the vehicle control apparatus 61 reassigns the vehicle 181 that delivers the item, in response to an adjustment request from the integrated management apparatus 51 in the emergency mode.
Fig. 17 shows areas covered by the vehicle 181.
Fig. 18 schematically shows a system configuration of an integrated management apparatus 50.
Fig. 19 shows an overview of an overall system execution sequence in relation to a movement of a vehicle 110 in the control system 100.
Fig. 20 shows execution sequences of processing which are executed by the integrated management apparatus 50, a power control apparatus 40, and a vehicle control apparatus 60, and the vehicle 110 in an emergency mode.
Fig. 21 shows an example of a data structure of delivery information which is managed by a processing unit 220.
Fig. 22 schematically shows a change in vehicle speed of the vehicle 110 from a departure from a base 10 to a return to the base 10 via business establishments 11 to 14.
Fig. 23 is a graph schematically showing predicted values of temporal changes in power consumption, power generation, and remaining capacity of a stationary battery, for the next day for each of the base 10 and the business establishments 11 to 14.
Fig. 24 schematically shows a control of the vehicle 110 based on operation information and power transmission/reception information.
Fig. 25 is a flowchart showing details of processing from S306 to S310 in Fig. 20.
Fig. 26 is a flowchart showing processing which is executed in a day when the vehicle 110 departs from the base 10.
Fig. 27 is a flowchart showing processing which is executed when the vehicle 110 arrives at the business establishments 11 to 14.
Fig. 28 is a schematic diagram for describing processing of the processing unit 220 in a second embodiment.
Fig. 29 is a schematic diagram for describing processing of the processing unit 220 in a control system 1200 in a third embodiment.
Fig. 30 shows an example of a computer 2000.

### DESCRIPTION OF EXEMPLARY EMBODIMENTS

Hereinafter, the present invention will be described through embodiments of the invention, but the following embodiments do not limit the invention according to claims. In addition, not all of the combinations of features described in the embodiments are essential to the solution of the invention.

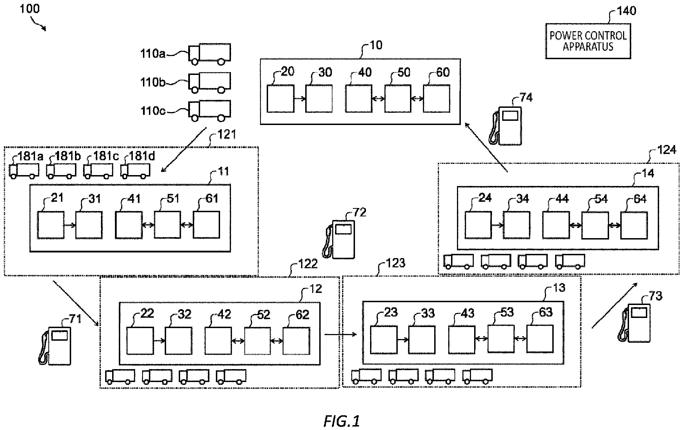

Fig. 1 schematically shows a control system 100 according to a first embodiment. The control system 100 includes a power control apparatus 40, a power control apparatus 41, a power control apparatus 42, a power control apparatus 43, and a power control apparatus 44; a vehicle control apparatus 60, a vehicle control apparatus 61, a vehicle control apparatus 62, a vehicle control apparatus 63, and a vehicle control apparatus 64; an integrated management apparatus 50, an integrated management apparatus 51, an integrated management apparatus 52, an integrated management apparatus 53, and an integrated management apparatus 54; and a power control apparatus 140.

In the present embodiment, a vehicle 110a, a vehicle 110b, and a vehicle 110c are vehicles including batteries for traveling which accumulate driving power for traveling. The vehicle 110a, the vehicle 110b, and the vehicle 110c are, for example, electric vehicles. The vehicle 110a, the vehicle 110b, and the vehicle 110c are delivery vehicles that can transport items to a business establishment 11, a business establishment 12, a business establishment 13, and a business establishment 14. It should be noted that in the present embodiment, the vehicle 110a, the vehicle 110b, and the vehicle 110c may be collectively referred to as "vehicle(s) 110". The vehicle 110 is provided to be able to communicate with the vehicle control apparatus 60 through a mobile communication network or the like.

A base 10 is, for example, a business establishment for managing a business of deliveries of items to the business establishment 11, the business establishment 12, the business establishment 13, and the business establishment 14. The base 10 functions as a base for parking the vehicle 110. The base 10 and the business establishments 11 to 14 are able to transmit and receive power to and from the battery for traveling of the vehicle 110. That is, the vehicle 110 is able to be used for energy management in the base 10 and the business establishments 11 to 14. The integrated management apparatus 50 and the vehicle control apparatus 60 are managed in the base 10, for example. The integrated management apparatus 50 and the vehicle control apparatus 60 are provided to be able to communicate with each other by a communication line. The integrated management apparatus 50 and the vehicle control apparatus 60 may be provided outside the base 10. The integrated management apparatus 50 and the vehicle control apparatus 60 may be provided to be able to communicate through the communication line such as the Internet. One or both of the integrated management apparatus 50 and the vehicle control apparatus 60 may be realized by a server such as a cloud server.

The base 10 includes a power generation apparatus 20, a stationary battery 30, and the power control apparatus 40. The power generation apparatus 20 is, for example, a power generation apparatus using renewable energy of a solar power generation apparatus or the like. The stationary battery 30 is a battery provided in the base 10. The power control apparatus 40 controls charging and discharging of the stationary battery 30 according to an amount of power generation and a power demand of the power generation apparatus 20 to meet the power demand in the base 10. The power control apparatus 40 is able to communicate with the integrated management apparatus 50 through the communication line such as the Internet.

Each of the business establishments 11 to 14 includes a vehicle for transporting an item. For example, the business establishment 11 includes a vehicle 181a, a vehicle 181b, a vehicle 181c, and a vehicle 181d. In the present embodiment, the vehicle 181a, the vehicle 181b, the vehicle 181c, and the vehicle 181d may be collectively referred to as "vehicle(s) 181". The business establishment 11 is a business establishment for delivering the item transported to the business establishment 11, to a house or the like within a specific area 121. The business establishment 12 is a business establishment for delivering the item transported to the business establishment 12, to a house or the like within a specific area 122. The business establishment 13 is a business establishment for delivering the item transported to the business establishment 13, to a house or the like within a specific area 123. The business establishment 14 is a business establishment for delivering the item transported to the business establishment 14, to a house or the like within a specific area 124. It should be noted that delivery destinations of the items from the business establishments 11 to 14 are not limited to the house, and may be a store or the like such as a convenience store.

The business establishment 11 includes a power generation apparatus 21, a stationary battery 31, the power control apparatus 41, the integrated management apparatus 51, and the vehicle control apparatus 61. The power generation apparatus 21 is, for example, a power generation apparatus using renewable energy of the solar power generation apparatus or the like. The stationary battery 31 is a battery provided in the business establishment 11. The power control apparatus 41 controls the charging and discharging of the stationary battery 31 according to the amount of power generation and the power demand of the power generation apparatus 21 to meet the power demand in the business establishment 11. The power control apparatus 41 causes the power to be transmitted and received between the business establishment 11 and the battery for traveling of the vehicle 181 stopped in the business establishment 11. The vehicle control apparatus 61 decides a time at which the vehicle 181 included in the business establishment 11 departs from the business establishment 11 and a time at which the vehicle 181 returns, to meet a delivery demand. The integrated management apparatus 50 adjusts the time at which the vehicle 181 departs from the business establishment 11 and the time at which the vehicle 181 returns, to meet the delivery demand indicated by delivery schedule information of the item and power demand information in the business establishment 11.

The business establishment 12 includes a power generation apparatus 22, a stationary battery 32, the power control apparatus 42, the integrated management apparatus 52, and the vehicle control apparatus 62. The business establishment 13 includes a power generation apparatus 23, a stationary battery 33, the power control apparatus 43, the integrated management apparatus 53, and the vehicle control apparatus 63. The business establishment 14 includes a power generation apparatus 24, a stationary battery 34, the power control apparatus 44, the integrated management apparatus 54, and the vehicle control apparatus 64. The power generation apparatus 22, the power generation apparatus 23, and the power generation apparatus 24 have functions similar to that of the power generation apparatus 21. The stationary battery 32, the stationary battery 33, and the stationary battery 34 have functions similar to that of the stationary battery 31. The power control apparatus 42, the power control apparatus 43, and the power control apparatus 44 have functions similar to that of the power control apparatus 41. The integrated management apparatus 52, the integrated management apparatus 53, and the integrated management apparatus 54 have functions similar to that of the integrated management apparatus 51. The vehicle control apparatus 62, the vehicle control apparatus 63, and the vehicle control apparatus 64 have functions similar to that of the vehicle control apparatus 61. Therefore, the descriptions of the power generation apparatuses, the stationary batteries, and the power control apparatuses in the business establishments 12 to 14 will be omitted.

In the present embodiment, the vehicle 110 are scheduled to depart from the base 10 and then return to the base 10 via the business establishment 11, business establishment 12, and business establishment 13, in order. The vehicle control apparatus 60 acquires, from the business establishments 11 to 14, the delivery demand indicating the item that is desired by each of the business establishments to be delivered the next day, and transmits the acquired delivery demand to the integrated management apparatus 50 as the delivery schedule information. In addition, the power control apparatuses 40 to 44 respectively predict power consumption and amounts of power generation of the power generation apparatuses 20 to 24 for the next day in the base 10 and the business establishments 11 to 14, to transmit the predicted power consumption and amount of power generation to the integrated management apparatus 50 as the power demand information. The integrated management apparatus 50 decides times when the vehicle 110 arrives at and departs from each of the business establishments 11 to 14, so as to meet the delivery demand indicated by the delivery schedule information, and the power demand information for each of the base 10 and the business establishments 11 to 14; and causes the power to be transmitted and received between the battery for traveling of the vehicle 110 and the business establishments 11 to 14 when the vehicle 110 is stopped for each of the business establishments 11 to 14 and unloads the items. It should be noted that stands 71 to 74 are charging stands installed outside the business establishments 11 to 14. When it is determined that the battery of the vehicle 110 requires supplementary charging at any stand of the stands 71 to 74, the integrated management apparatus 50 may decide operation information for going via the stand, and cause the battery for traveling to be charged at the stand according to the decided operation information.

It should be noted that the power control apparatus 140 communicates with the power control apparatuses 40 to 44 and supervises an overall power control in the base 10 and the business establishments 11 to 14. For example, the power control apparatus 140 may collect information in relation to power supply and demand from the power control apparatuses 40 to 44, and cause the power control apparatuses 40 to 44 to perform the controls, so as to minimize a power cost as a whole of the base 10 and the business establishments 11 to 14 by performing an adjustment of the overall power supply and demand which includes a power transaction with a system.

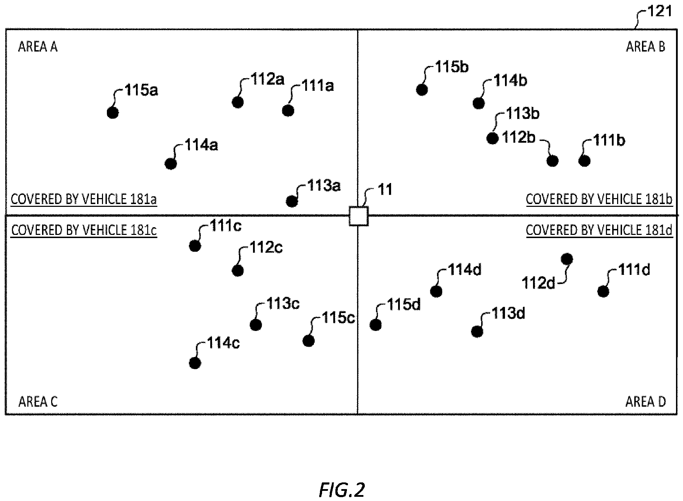

Fig. 2 schematically shows a delivery route for an item from the business establishment 11. The present embodiment describes a case where in the area 121, there exist: a delivery destination 111a, a delivery destination 112a, a delivery destination 113a, a delivery destination 114a, and a delivery destination 115a in an area A; a delivery destination 111b, a delivery destination 112b, a delivery destination 113b, a delivery destination 114b, and a delivery destination 115b in an area B; a delivery destination 111c, a delivery destination 112c, a delivery destination 113c, a delivery destination 114c, and a delivery destination 115c in an area C; and a delivery destination 111d, a delivery destination 112d, a delivery destination 113d, a delivery destination 114d, and a delivery destination 115d in an area D.

The vehicle 181a, the vehicle 181b, the vehicle 181c, and the vehicle 181d included in the business establishment 11 are vehicles including the batteries for traveling which accumulate the driving power for traveling. The vehicle 181a, the vehicle 181b, the vehicle 181c, and the vehicle 181d are, for example, the electric vehicles. The vehicle 181a, the vehicle 181b, the vehicle 181c, and the vehicle 181d are delivery vehicles for transporting the items to the delivery destinations 111-115. The vehicle 181 is provided to be able to communicate with the vehicle control apparatus 61 through the mobile communication network or the like.

Based on delivery information, the vehicle control apparatus 61 decides to: deliver the items to the delivery destinations 111a to 115a in the area A, by the vehicle 181a; deliver the items to the delivery destinations 111b to 115b in the area B, by the vehicle 181b; deliver the items to the delivery destinations 111c to 115c in the area C, by the vehicle 181c; and deliver the items to the delivery destinations 111d to 115d in area D, by the vehicle 181d. The vehicle control apparatus 61 acquires, from the business establishment 11, the delivery demand indicating the item that is desired by each of the delivery destinations to be delivered the next day; decides a travel route of each of the vehicles 181a to 181d and the departure time and the return time from and to the business establishment 11 as the delivery schedule information; and transmits, to the integrated management apparatus 51, the travel route, the departure time, and the return time that are decided. In addition, the power control apparatus 41 predicts the power consumption and the amount of power generation of the power generation apparatus 21 for the next day in the business establishment 11, and transmits, to the integrated management apparatus 51, the power consumption and the amount of power generation that are predicted, as the power demand information. The integrated management apparatus 51 decides the departure time from the business establishment 11, the delivery route of the vehicle 181, and the return time to the business establishment 11, so as to meet the delivery demand indicated by the delivery schedule information and the power demand information in the business establishment 11; and causes the power to be transmitted and received between the battery for traveling of the vehicle 181 and the business establishment 11 when the vehicle 181 is stopped at the business establishment 11.

It should be noted that delivery controls of the items and power controls in the business establishments 12 to 14 are similar to the delivery control of the item and the power control in the business establishment 11. Therefore, in the present embodiment, the delivery control of the item and the power control in the business establishment 11 will be described, and descriptions of the delivery controls and the power controls in the business establishments 12 to 14 will be omitted.

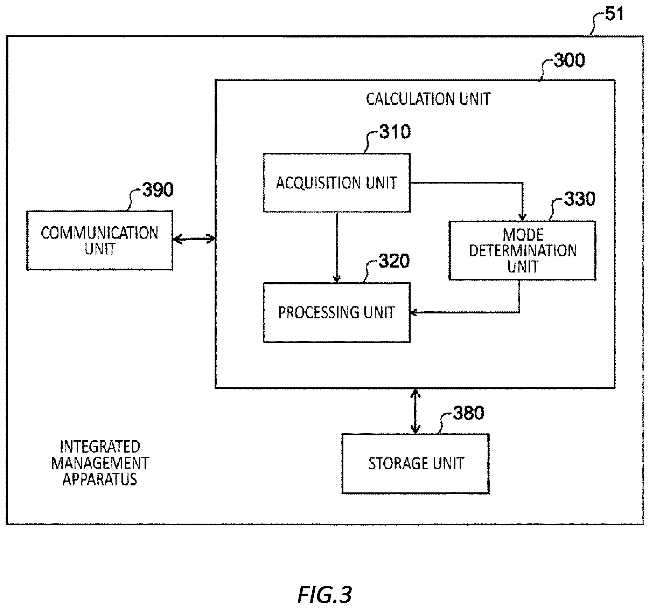

Fig. 3 schematically shows a system configuration of the integrated management apparatus 51. The integrated management apparatus 51 includes a calculation unit 300, a storage unit 380, and a communication unit 390. The calculation unit 300 includes an acquisition unit 310, a processing unit 320, and a mode determination unit 330.

The calculation unit 300 is realized by, for example, a calculation processing apparatus including a processor. The storage unit 380 is realized by including a non-volatile storage medium. The calculation unit 300 performs processing by using information stored in the storage unit 380. The communication unit 390 is responsible for a communication with the power control apparatus 41, the vehicle control apparatus 61, and the vehicle 181. The calculation unit 300 communicates with the outside through the communication unit 390.

The acquisition unit 310 acquires (I) a first demand which is sent from an energy management apparatus that manages energy, and which includes an amount of demand, a demand time, and a demand position in relation to an energy demand, and (II) a second demand which is sent from a moving body management apparatus that manages a moving body, and which includes an amount of demand, a demand time, and a demand position in relation to a demand of the moving body. The processing unit 320 includes a processing unit which performs at least one of processing for deciding a position and a time at which the moving body moves, or processing for determining whether both demands of the first demand and the second demand can be met, based on the first demand and the second demand that are acquired by the acquisition unit 310. The mode determination unit 330 switches between a plurality of modes which includes, as modes for managing the energy and the moving body, a first mode in which the first demand is met to an extent possible while the second demand is met, and a second mode in which the second demand is met to an extent possible while the first demand is met. It should be noted that the power control apparatus 41 in the present embodiment is an example of the energy management apparatus that manages the energy. In the present embodiment, the power control apparatus 41 manages and controls the electric power as an example of the energy; however, the power control apparatus 41 may manage the electric power without controlling the electric power. The vehicle control apparatus 61 in the present embodiment is an example of the moving body management apparatus. In the present embodiment, the vehicle control apparatus 61 manages and controls the vehicle 181 as an example of the moving body; however, the vehicle control apparatus 61 may manage the vehicle 181 without controlling the vehicle 181.

It should be noted that a "normal mode" which will be described below is an example of the first mode. A "special mode" and an "emergency mode", which will be described below are examples of the second mode. When it is determined that performing of peak shaving of power is required in a power plan prepared by the power control apparatus 41, the mode determination unit 330 may select the "special mode". The mode determination unit 330 may select the "normal mode" when it is determined that the performing of the peak shaving of the power is not required in the power plan prepared by the power control apparatus 41. It should be noted that the mode may be set in the business establishment 11. For example, when the "emergency mode" is selected in the business establishment 11, the mode determination unit 330 may always select the "emergency mode".

As a mode for managing the energy and the moving body, the mode determination unit 330 may determine a mode to be executed in the future among the plurality of modes. As the mode for managing the energy and the moving body, the mode determination unit 330 may determine a mode to be currently executed, regardless of a mode being executed, among the plurality of modes. In a case where the moving body starts moving based on the position and the time at which the moving body moves and which are decided according to the mode determined by the mode determination unit 330, and then a predetermined emergency condition is met, the mode determination unit 330 may determine the mode to be currently executed among the plurality of modes.

The first mode may be a mode in which the position and the time at which the moving body moves are decided to meet the second demand, and the time at which the moving body moves is adjusted to meet the first demand to the extent possible while meeting the second demand.

When the first mode is determined by the mode determination unit 330, the processing unit 320 may perform processing of determining whether both demands of the first demand and the second demand can be met, by the moving body moving according to the position and the time at which the moving body moves and which are decided to meet the second demand, and in a case where it is determined that both demands of the first demand and the second demand cannot be met, the processing unit 320 may perform processing of adjusting the time at which the moving body moves to meet the first demand to the extent possible while meeting the second demand.

The second mode may be a mode in which a moving body required to meet the first demand is selected from among the plurality of moving bodies, and in which a moving body other than the moving body selected from among the plurality of moving bodies, is caused to move to meet the second demand to the extent possible.

When the second mode is determined by the mode determination unit 330, the processing unit 320 may perform processing for selecting the moving body required to meet the first demand from among the plurality of moving bodies, and processing for deciding, to meet the second demand to the extent possible, the position and the time at which the moving body other than the moving body selected from among the plurality of moving bodies, moves.

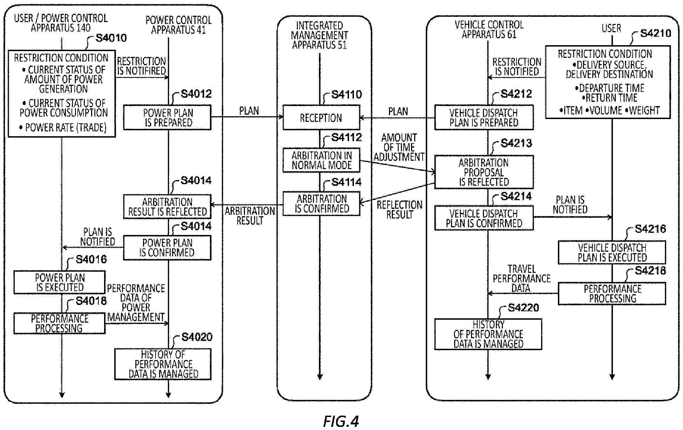

Fig. 4 shows execution sequences of the power control apparatus 41, the integrated management apparatus 51, and the vehicle control apparatus 61 in a normal mode. The processing in Fig. 4 represents processing from preparing, on a day before, the power plan and a vehicle dispatch plan for the next day, to executing the plan according to the prepared plan.

As the control in relation to the power control apparatus 41, in S4010, at least one of a user of the power control apparatus 41 or the power control apparatus 140 sets a restriction condition in relation to the power plan in the business establishment 11, and notifies the power control apparatus 41 of the set restriction condition. The power control apparatus 140 may set the restriction condition in the business establishment 11 to minimize the power costs for the base 10 and the business establishments 11 to 14 as a whole. It should be noted that the user is a person or a system that inputs the information in relation to power management in the business establishment 11, to the power control apparatus 41. The restriction condition is a condition which becomes a restriction for the preparation of the power plan. The restriction condition may include a restriction which is required to meet the power demand. The restriction condition includes, for example, information in relation to a current status of the amount of power generation, a current status of an amount of power consumption, and a power rate. The amount of power generation is an amount of power generation in the power generation apparatus 21, for example. The amount of power consumption is an amount of power consumption in the business establishment 11. The power rate includes a power purchase price and a power selling price. The power purchase price is, for example, a condition in relation to an amount of money which is charged to the business establishment 11 as a consideration for receiving the power from the system. The power selling price is, for example, a condition in relation to an amount of money which is obtained by the business establishment 11 as a consideration for supplying the power to the system.

In S4012, the power control apparatus 41 prepares the power plan for the next day in the business establishment 11. The power plan includes the amount of power generation, an amount of power storage, and the power consumption for each time window of a day. By the power plan, for each time window in the business establishment 11, how much the power is generated, how much the power is consumed, how much the stationary battery 31 is charged, or how much the power is discharged from the stationary battery 31 are determined. The amount of power generation for each time window for the next day may be predicted from environmental information such as weather information for the next day and performance data in the past. The power plan may include peak shaving information to perform the peak shaving. The peak shaving information may include information indicating how much the power consumption is to be suppressed in which time window, in the business establishment 11. The peak shaving information may include information indicating how much the power is to be received from the outside in which time window, in the business establishment 11.

The power control apparatus 41 may prepare an optimal power plan in the business establishment 11. For example, the power control apparatus 41 may prepare the power plan to minimize the amount of power which is received from the system, in the business establishment 11. The power control apparatus 41 may prepare the power plan to minimize the amount of money which is charged to the business establishment 11 as the consideration for receiving the power from the system. The power control apparatus 41 may prepare the power plan to maximize the amount of money which is obtained by the business establishment 11 as the consideration for supplying the power to the system. In this way, the power control apparatus 41 prepares the optimal power plan as the power plan for the next day in the business establishment 11, based on the restriction condition. By this power plan, the amount of power which is required to be received from the outside for each time window for the next day, is determined. The amount of power which is required to be received from the outside may be supplied from the battery for traveling of the vehicle 181 that is parked in the business establishment 11. The power control apparatus 41 transmits the prepared power plan to the integrated management apparatus 51.

As a control in relation to the vehicle control apparatus 61, the user inputs the restriction condition in relation to vehicle dispatch of the vehicle 181, in S4210. The user of the vehicle control apparatus 61 is, for example, a person, a system, or the like that inputs delivery demand data, in the business establishment 11. The restriction condition for the vehicle dispatch may include a restriction which is required to meet the delivery demand for the item in the area 121. The restriction condition for the vehicle dispatch is a condition which becomes a restriction for the preparation of the vehicle dispatch plan. The restriction condition for the vehicle dispatch includes, for example, a delivery source and the delivery destination, the departure time and the return time in the business establishment 11, and a type of the item as a load, a volume of the item, a weight of the item, and the like. By the delivery source and the delivery destination, from which place to which place the vehicle 181 is required to travel is determined. The departure time is a time when the vehicle 181 departs from the business establishment 11, and the return time is a time when the vehicle 181 returns to the business establishment 11. For the departure time and the return time, an allowable amount of time adjustment which indicates a time by which a change of the departure time and the return time of the vehicle 181 can be allowed, may be set.

In S4212, the vehicle control apparatus 61 prepares the vehicle dispatch plan for the next day in the business establishment 11 based on the restriction condition notified by the user. For example, the vehicle control apparatus 61 decides the number of vehicles 181 that are used for the deliveries, the vehicle 181 that is used for the delivery of the item, the area to which the vehicle 181 delivers the item, the travel route of the vehicle 181, and a travel speed of the vehicle 181, so as to meet the delivery demand which is determined by the restriction condition. The vehicle control apparatus 61 transmits the prepared vehicle dispatch plan to the integrated management apparatus 51.

In S4110, the integrated management apparatus 51 receives the power plan transmitted from the power control apparatus 41, and the vehicle dispatch plan transmitted from the vehicle control apparatus 61.

In S4112, when the mode determination unit 330 of the integrated management apparatus 51 determines to perform the control in the normal mode based on the power plan, the processing unit 320 arbitrates the power plan and the vehicle dispatch plan in the normal mode. For example, when the vehicle 181 is operated according to the vehicle dispatch plan, the processing unit 320 determines whether the power plan is met in the business establishment 11. For example, a period during which the vehicle 181 is predicted to be present in the business establishment 11 is determined, from the vehicle dispatch plan. When it is predicted that the business establishment 11 can receive, in a required time window, the power which is required to be supplied from the outside, from the battery for traveling of the vehicle 181, in the period during which the vehicle 181 is present in the business establishment 11, the processing unit 320 determines that the power plan is met. In addition, in the business establishment 11, when it is predicted that each business establishment 11 can supply, in a time window during which the power is required to be discharged, the power which is required to be discharged to the outside, to the battery for traveling of the vehicle 181, the processing unit 320 determines that the power plan is met.

In a case where it is determined that the power plan cannot be met when the vehicle is dispatched according to the vehicle dispatch plan, the processing unit 320 determines how the vehicle dispatch plan can be corrected to meet the power plan. For example, the processing unit 320 decides an amount of adjustment of the departure time and arrival time of the vehicle 181 with respect to the vehicle dispatch plan received from the vehicle control apparatus 61, within a range of the allowable amount of time adjustment in the vehicle dispatch plan.

In S4112, the integrated management apparatus 51 transmits, to the vehicle control apparatus 61, an amount of time adjustment including a correction of the vehicle dispatch plan. When the amount of time arbitration is received from the integrated management apparatus 51, the vehicle control apparatus 61 reflects the amount of time adjustment in the vehicle dispatch plan prepared in S4212 (S4213). For example, the vehicle control apparatus 61 corrects the departure time and the return time in the prepared vehicle dispatch plan, according to the amount of time adjustment. The vehicle control apparatus 61 transmits the vehicle dispatch plan indicating the corrected departure time and return time, to the integrated management apparatus 51 as a reflection result of the amount of time adjustment.

In S4114, when the corrected vehicle dispatch plan is received from the vehicle control apparatus 61, the integrated management apparatus 51 transmits, to the power control apparatus 41, an arbitration result indicating the corrected vehicle dispatch plan. When the arbitration result is received from the integrated management apparatus 51, the power control apparatus 41 performs a reflection based on the arbitration result in the power plan (S4014), and notifies the user of the power plan confirmed by reflecting the arbitration result (S4015). In S4016, the user and the power control apparatus 140 execute the control according to the notified power plan. In S4018, the user and the power control apparatus 140 perform performance processing in relation to the execution of the power plan. For example, the user performs processing of collecting and inputting performance data of the power management which includes performance data of the amounts of charging and discharging the stationary battery, performance data of the power generation, and performance data of the amount of power consumption, for each time window. In S4020, the power control apparatus 41 manages the performance data which is input from each of the user and the power control apparatus 140, as history information. It should be noted that the power control apparatus 41 may use the history information managed by the power control apparatus 41 in a case of preparing the power plan later.

In addition, the vehicle control apparatus 61 confirms the vehicle dispatch plan by reflecting the amount of time adjustment in S4213 (S4214), and notifies the user of the confirmed vehicle dispatch plan. In S4216, the user executes an operation control of the vehicle 181 according to the notified vehicle dispatch plan. In S4218, the user performs the performance processing in relation to the execution of the vehicle dispatch plan. For example, the user performs processing including processing of collecting and inputting travel performance data including travel data, a remaining capacity of the battery for traveling, or the like of each vehicle 181. In S4220, the vehicle control apparatus 61 manages the travel performance data which is input from the user, as the history information. It should be noted that the vehicle control apparatus 61 may use the history information managed by the vehicle control apparatus 61 in a case of preparing the vehicle dispatch plan later.

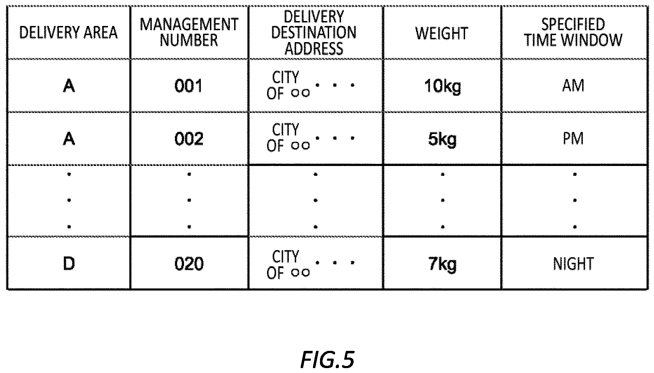

Fig. 5 schematically shows an example of delivery information which is input by a user of the vehicle control apparatus 61. The delivery information includes a delivery area, a management number, a delivery destination address, a weight, and a specified time window. For the delivery area, information for identifying the areas A to D is specified. For the management number, identification information of the item that is delivered is specified. For the delivery destination address, the address of the delivery destination is specified. The information which is specified for the delivery area is determined from the delivery destination address. For the weight, the weight of the item that is delivered is specified. For the specified time window, the time window during which the item is to be delivered is specified.

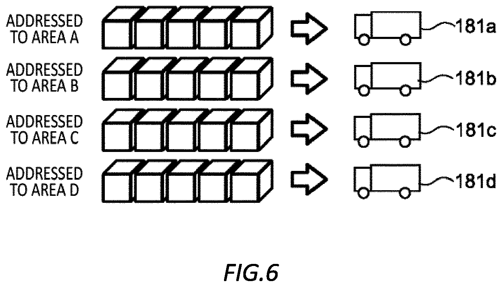

Fig. 6 schematically shows processing in which the vehicle control apparatus 61 assigns the vehicle 181 that delivers the item, at a time of preparing a vehicle dispatch plan. Based on the delivery destination address of each item included in the delivery information, the vehicle control apparatus 61 groups the items according to the area A to area D of the delivery destination of each item, and decides which vehicle 181 delivers which item. As shown in Fig. 6, the vehicle control apparatus 61 assigns the vehicle 181a as a vehicle for delivering the item whose delivery destination is the area A, assigns the vehicle 181b as a vehicle for delivering the item whose delivery destination is the area B, assigns the vehicle 181c as a vehicle for delivering the item whose delivery destination is the area C, and assigns the vehicle 181d as a vehicle for delivering the item whose delivery destination is the area D.

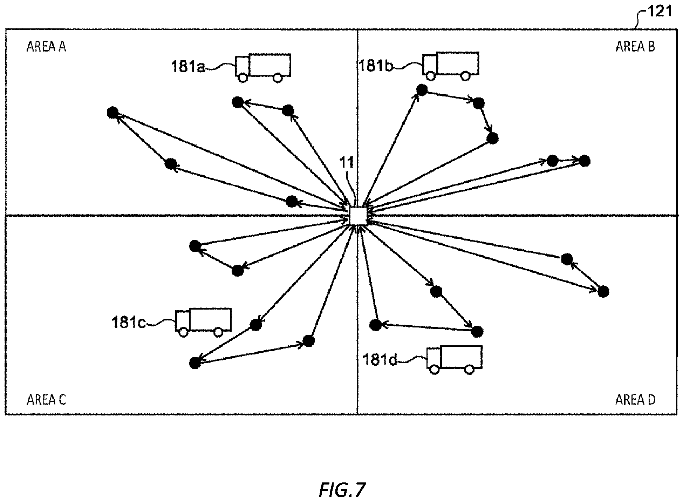

Fig. 7 shows information indicating a position of a delivery destination and the delivery route decided by the vehicle control apparatus 61 at the time of preparing the vehicle dispatch plan. The vehicle control apparatus 61 decides the delivery route and a delivery time window, based on the delivery destination address, the specified time window, and the weight included in the delivery information. The vehicle control apparatus 61 decides the delivery route and the delivery time window to minimize the amount of power which is consumed by the travel of the vehicle 181. In addition, when the delivery is performed by the decided delivery route, the vehicle control apparatus 61 calculates a time required for the delivery from the departure from the business establishment 11 to the arrival at the business establishment 11. In this manner, the vehicle control apparatus 61 decides the departure time and the return time of each vehicle 181.

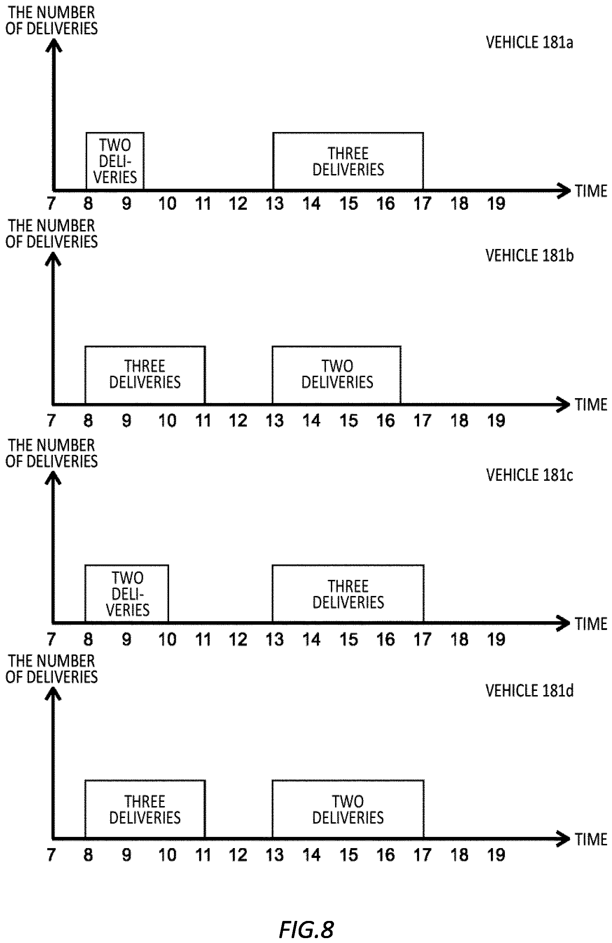

Fig. 8 schematically shows the number of items to be delivered by each vehicle 181 based on the prepared vehicle dispatch plan. According to the vehicle dispatch plan shown in Fig. 8, the vehicle 181a departs from the business establishment 11 at 8:00 am, and returns to the business establishment 11 at 9:30 am, first; and again departs from the business establishment 11 at 13:00 pm, and returns to the business establishment 11 at 17:00 pm. In addition, the vehicle 181b departs from the business establishment 11 at 8:00 am, and returns to the business establishment 11 at 11:00 am, first; and again departs from the business establishment 11 again at 13:00 pm, and returns to a business establishment 16 at 16:30 pm. The vehicle 181c departs from the business establishment 11 at 8:00 am, and returns to the business establishment 11 at 10:00 am, first; and again departs from the business establishment 11 again at 13:00 pm, and returns to the business establishment 16 at 17:00 pm. In addition, the vehicle 181d departs from the business establishment 11 at 8:00 am, and returns to the business establishment 11 at 11:00 am, first; and again departs from the business establishment 11 again at 13:00 pm, and returns to the business establishment 16 at 17:00 pm.

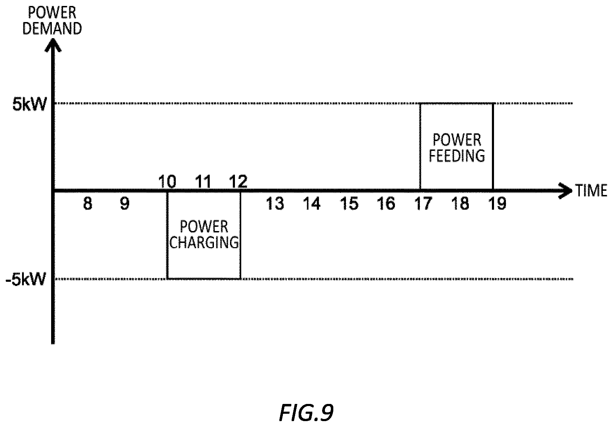

Fig. 9 shows a power charging demand and a power feeding demand in the business establishment 11 decided by the power control apparatus 41 at a time of preparing a power plan. The power charging demand indicates that the stationary battery 31 provided in the business establishment 11 is required to be charged, and the power feeding demand indicates that the power is required to be discharged from the stationary battery 31.

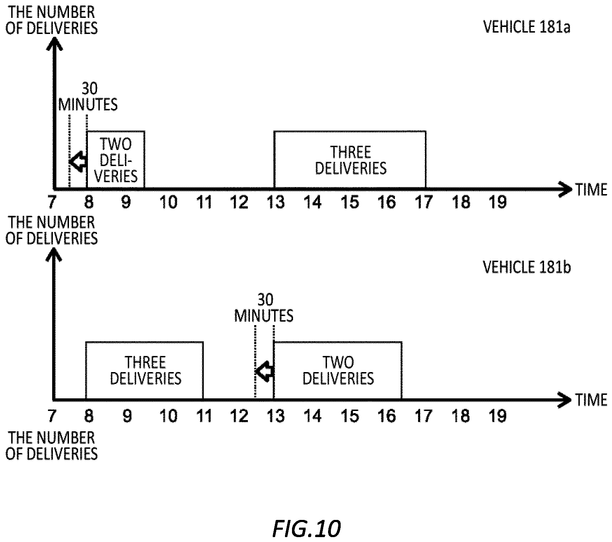

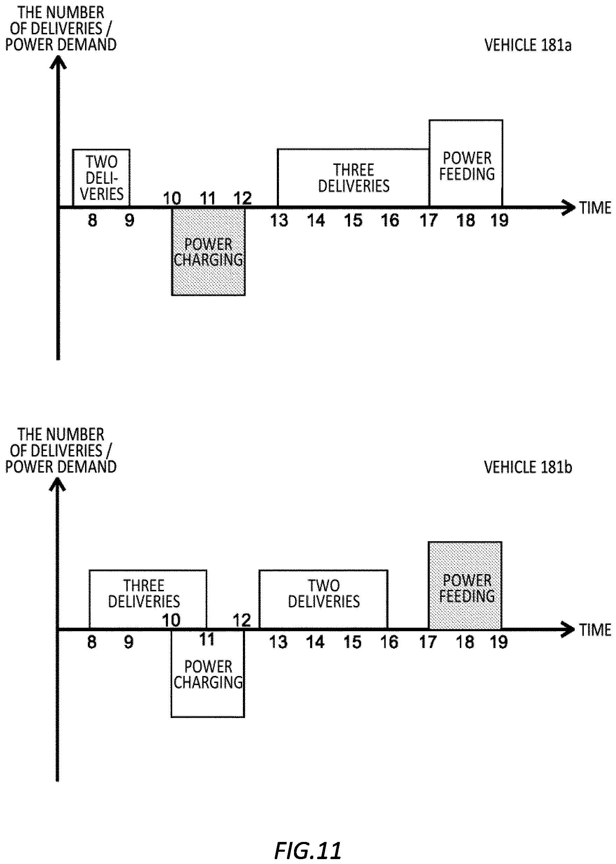

Fig. 10 schematically shows processing in which the integrated management apparatus 51 adjusts a delivery plan according to a power demand. As shown in Fig. 10, the processing unit 320 of integrated management apparatus 51 advances the departure time of the vehicle 181a in the morning by 30 minutes such that the vehicle 181a returns to the business establishment 11 before a start time of the power charging demand in the business establishment 11. In addition, the processing unit 320 advances the departure time of the vehicle 181b in the afternoon by 30 minutes such that the vehicle 181b returns to the business establishment 11 before a start time of the power feeding demand in the business establishment 11. In this manner, as shown in Fig. 11, by adjusting the vehicle dispatch plan based on the amount of time adjustment, the vehicle 181a can return to the business establishment 11 by a predetermined time before the start time of the power charging demand, and the stationary battery 31 can be charged with the power from the battery for traveling of the vehicle 181a. In addition, the vehicle 181b can return to the business establishment 11 by a predetermined time before the start time of the power feeding demand, and the battery for traveling of the vehicle 181b can be charged with the power discharged from the stationary battery 31. In this way, the processing unit 320 decides the amount of time adjustment in the vehicle dispatch plan such that any vehicles 181 return to the business establishment 11 by the predetermined times before the start time of the power charging demand and the start time of the power feeding demand.

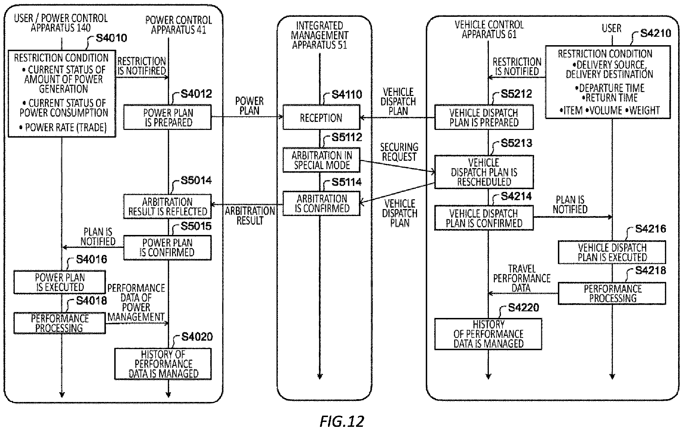

Fig. 12 shows execution sequences of the power control apparatus 41, the integrated management apparatus 51, and the vehicle control apparatus 61 when a special mode is determined. The processing in Fig. 12 represents the processing from preparing, on a day before, the power plan and the vehicle dispatch plan for the next day, to executing the plan according to the prepared plan.

The processing of S4010, S4012, S4110, and S4210 is the same as the processing of S4010, S4012, S4110, and S4210 in Fig. 4, and thus the descriptions here are omitted.

In S5112, when the mode determination unit 330 of the integrated management apparatus 51 determines to perform the control in the special mode based on the power plan, the processing unit 320 arbitrates the power plan and the vehicle dispatch plan in the special mode. When it is determined that the amount of power consumption to be suppressed exceeds a predetermined value in the business establishment 11, based on the peak shaving information which is included in the power plan, the mode determination unit 330 may determine to perform the control in the special mode. When it is determined that the control is performed in the special mode, the processing unit 320 decides a power capacity of the battery for traveling to be secured for the peak shaving in the business establishment 11, based on the peak shaving information. The processing unit 320 transmits, to the vehicle control apparatus 61, a securing request including the decided power capacity.

When the securing request is received from the integrated management apparatus 51, the vehicle control apparatus 61 decides the number of vehicles 181 to be always stationed in the business establishment 11, based on the power capacity included in the securing request; reschedules the vehicle dispatch plan by using the vehicle 181 other than the vehicles 181, the number of which is decided; and transmits the rescheduled vehicle dispatch plan to the integrated management apparatus 51 (S5213). The rescheduled vehicle dispatch plan includes information indicating the number of vehicles 181 that are always stationed in the business establishment 11.

In S5114, when the rescheduled vehicle dispatch plan is received from the vehicle control apparatus 61, the integrated management apparatus 51 transmits, to the power control apparatus 41, the rescheduled vehicle dispatch plan as the arbitration result. When the arbitration result is received from the integrated management apparatus 51, the power control apparatus 41 performs the reflection based on the arbitration result in the power plan (S5014), and notifies the user of the power plan confirmed by reflecting the arbitration result (S5015). The subsequent processing of S4016, S4018, and S4020 is the same as the processing of S4016, S4018, and S4020 of Fig. 4, and thus the descriptions here are omitted.

In addition, the vehicle control apparatus 61 confirms the rescheduled vehicle dispatch plan in S5213 (S5214), and notifies the user of the confirmed vehicle dispatch plan. The subsequent processing of S4216, S4218, and S4220 is the same as the processing of S4216, S4218, and S4220 of Fig. 4, and thus the descriptions here are omitted here.

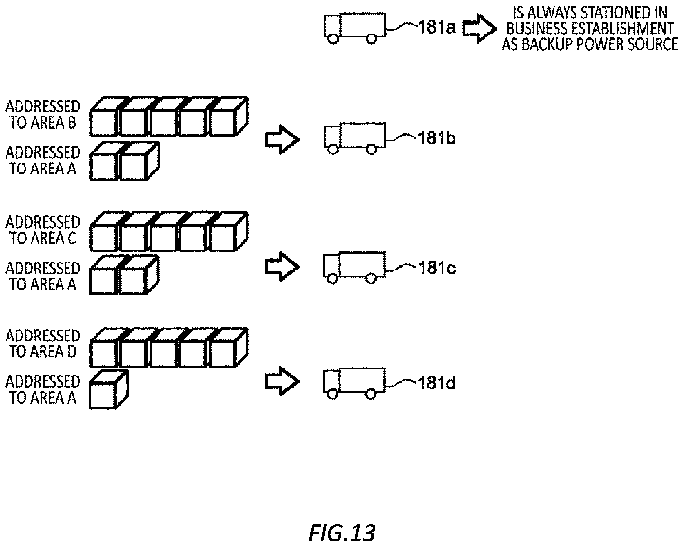

Fig. 13 schematically shows processing in which the vehicle control apparatus 61 reassigns the vehicle 181 that delivers the item, in response to an adjustment request from the integrated management apparatus 51 in the special mode. The vehicle control apparatus 61 selects the vehicle 181a to be always stationed in the business establishment 11 as a backup power source. At this time, the vehicle control apparatus 61 decides the number of vehicles 181 to be stationed in the business establishment 11 as the backup power sources, based on the remaining capacity of the battery for traveling of the vehicle 181 and the securing request notified from the integrated management apparatus 51; and selects the vehicles 181, the number of which is decided, as the vehicles 181 to be always stationed in the business establishment 11 as the backup power sources.

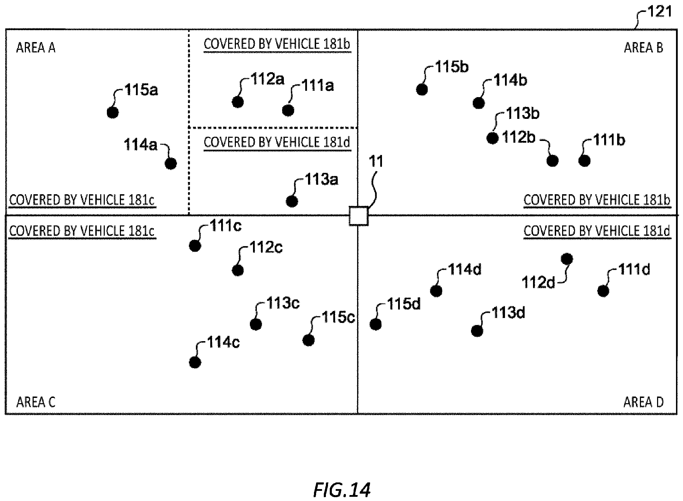

When the vehicle 181a is selected as the vehicle to be always stationed in the business establishment 11, the vehicle control apparatus 61 assigns the items to be delivered to the delivery destinations in the area A, to the vehicle 181b, the vehicle 181c, and the vehicle 181d, other than the vehicle 181a, based on the delivery destination address. For example, as shown in Fig. 13, the vehicle control apparatus 61 assigns, to the vehicle 181b, two items among five items whose delivery destinations are the area A, and the items whose delivery destinations are the area B. In addition, the vehicle control apparatus 61 assigns, to the vehicle 181c, two items among five items whose delivery destinations are the area A, and the items whose delivery destinations are the area C. In addition, the vehicle control apparatus 61 assigns, to the vehicle 181d, one item among five items whose delivery destinations are the area A, and the items whose delivery destinations are the area D. In this manner, as shown in Fig. 14, the areas covered by the vehicle 181b, the vehicle 181c, and the vehicle 181d are determined. The vehicle control apparatus 61 reschedules the vehicle dispatch plan based on the delivery destinations of the items assigned to the vehicle 181b, the vehicle 181c, and the vehicle 181d; and respectively decides the travel routes, the departure times, and the return times of the vehicle 181b, the vehicle 181c, and the vehicle 181d. This makes it possible for the power control apparatus 41 to control the charging and discharging of the battery for traveling of the vehicle 181a that is always stationed in the business establishment 11, so as to meet at least a part of the power demand of the business establishment 11.

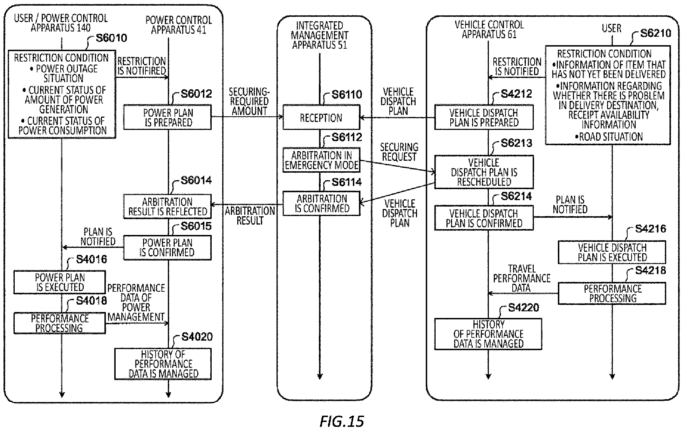

Fig. 15 shows execution sequences of the power control apparatus 41, the integrated management apparatus 51, and the vehicle control apparatus 61 in an emergency mode. The processing in Fig. 15 is started when a predetermined event occurs while the operation of the vehicle 181 and the control by the power control apparatus 41 are executed, according to the power plan and the vehicle dispatch plan which are created in the normal mode or the special mode. The predetermined event may be, for example, a disaster event such as a power outage, an earthquake, or the like.

As the control in relation to the power control apparatus 41, in S6010, at least one of the user of the power control apparatus 41 or the power control apparatus 140 sets the restriction condition in relation to the power plan in the business establishment 11, and notifies the power control apparatus 41 of the set restriction condition. The restriction condition includes a power outage situation, the current status of the amount of power generation, and the current status of the amount of power consumption. The amount of power generation is an amount of power generation in the power generation apparatus 21, for example. The amount of power consumption is an amount of power consumption in the business establishment 11.

In S6012, the power control apparatus 41 prepares the power plans for the day and the subsequent days in the business establishment 11. The power plan includes the amount of power generation, the amount of power storage, and the power consumption for each time window of a day. Based on the power plan, the power control apparatus 41 transmits, to the integrated management apparatus 51, a securing-required amount of power source capacity in the business establishment 11. The power control apparatus 41 may decide the securing-required amount, so as to be able to secure at least the power which is consumed at night in the business establishment 11.

As the control in relation to the vehicle control apparatus 61, the user inputs the restriction condition in relation to the vehicle dispatch of the vehicle 181, in S6210. The restriction condition may include: information indicating the item that has not yet been delivered; information regarding whether there is a problem in the delivery destination; receipt availability information indicating whether the delivery destination is able to receive the item; and a road situation including a situation regarding whether it is possible to pass a road.

In S6212, the vehicle control apparatus 61 prepares the vehicle dispatch plans for the day and the subsequent days in the business establishment 11 based on the restriction condition notified by the user. For example, the vehicle control apparatus 61 decides the number of vehicles 181 that are used for the deliveries, the vehicle 181 that is used for the delivery of the item, the area to which the vehicle 181 delivers the item, the travel route of the vehicle 181, and the travel speed of the vehicle 181, so as to meet the delivery demand of the item that has not yet been delivered. It should be noted that the vehicle control apparatus 61 prepares the delivery plan only for the item that is able to be delivered, based on the road situation and the receipt availability information. The vehicle control apparatus 61 transmits the prepared vehicle dispatch plan to the integrated management apparatus 51.

In S6110, the integrated management apparatus 51 receives the securing-required amount transmitted from power control apparatus 41, and the vehicle dispatch plan transmitted from vehicle control apparatus 61.

In S6112, when the mode determination unit 330 of the integrated management apparatus 51 determines to perform the control in the emergency mode by a predetermined event occurring, the processing unit 320 arbitrates the power plan and the vehicle dispatch plan in the emergency mode. For example, the processing unit 320 decides the power capacity of the battery for traveling to be secured in the business establishment 11, based on the securing-required amount received from the power control apparatus 41. The integrated management apparatus 51 transmits, to the vehicle control apparatus 61, the securing request including the decided power capacity.

When the securing request is received from the integrated management apparatus 51, the vehicle control apparatus 61 decides the number of vehicles 181 to be always stationed in the business establishment 11, based on the power capacity included in the securing request; reschedules the vehicle dispatch plan by using the vehicle 181 other than the vehicles 181, the number of which is decided, to dispatch the vehicle for the item that has not yet been delivered; and transmits the rescheduled vehicle dispatch plan to the integrated management apparatus 51 (S6213). The rescheduled vehicle dispatch plan includes the information indicating the number of vehicles 181 that are always stationed in the business establishment 11.

It should be noted that in the present embodiment, the vehicle 181 that is delivering the item and is not returned to the business establishment 11, at a time when a predetermined event occurs, is set to return to the business establishment 11, first, for all of the batteries for traveling of vehicles 181 to be charged to a full charge with the power generation apparatus 20. In addition, the user of the vehicle control apparatus 61 collects the road situation according to the predetermined event occurring, and receives the information for checking whether there is a problem in the delivery destination and the receipt availability information on the item. In addition, after the charging of the battery for traveling of the vehicle 181 is completed, the vehicle control apparatus 61 is set to: select the vehicle 181 to be always stationed in the business establishment 11 based on the securing request; and select the vehicle 181 other than the selected vehicle 181, as the vehicle 181 for delivering the item. The vehicle control apparatus 61 may reschedule the vehicle dispatch plan for the day and the subsequent days, to meet the delivery demand to the extent possible.

In S6114, when the rescheduled vehicle dispatch plan is received from the vehicle control apparatus 61, the integrated management apparatus 51 transmits, to the power control apparatus 41, the rescheduled vehicle dispatch plan as the arbitration result. When the arbitration result is received from the integrated management apparatus 51, the power control apparatus 41 performs the reflection based on the arbitration result in the power plan (S6014), and notifies the user of the power plan confirmed by reflecting the arbitration result (S6015). The subsequent processing of S4016, S4018, and S4020 is the same as the processing of S4016, S4018, and S4020 of Fig. 4, and thus the descriptions here are omitted.

In addition, the vehicle control apparatus 61 confirms the rescheduled vehicle dispatch plan in S6213 (S6214), and notifies the user of the confirmed vehicle dispatch plan. The subsequent processing of S4216, S4218, and S4220 is the same as the processing of S4216, S4218, and S4220 of Fig. 4, and thus the descriptions here are omitted here.

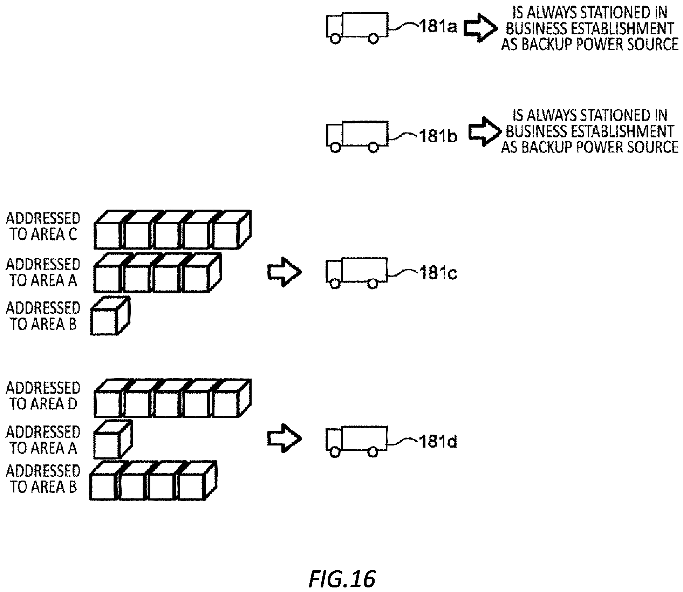

Fig. 16 schematically shows processing in which the vehicle control apparatus 61 reassigns the vehicle 181 that delivers the item, in response to an adjustment request from the integrated management apparatus 51 in the emergency mode. The vehicle control apparatus 61 selects the vehicle 181a and the vehicle 181b, as the vehicles 181 to be always stationed in the business establishment 11 as the backup power sources. At this time, the vehicle control apparatus 61 decides the number of vehicles 181 to be stationed in the business establishment 11 as the backup power sources, based on the remaining capacity of the battery for traveling of the vehicle 181 and the securing request notified from the integrated management apparatus 51; and selects the vehicles 181, the number of which is decided, as the vehicles 181 to be always stationed in the business establishment 11 as the backup power sources.

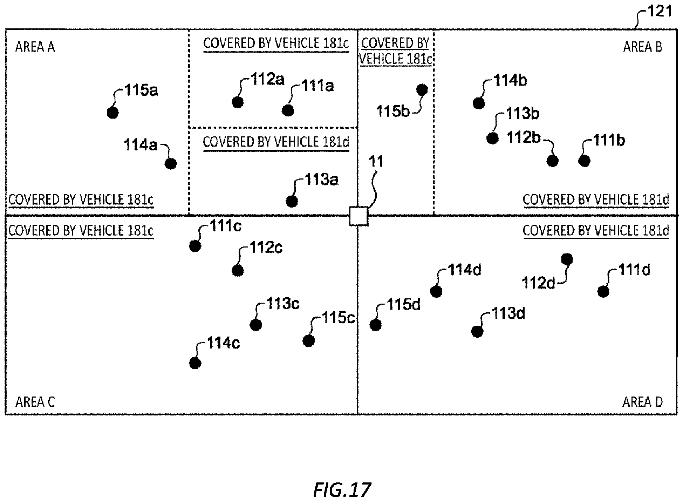

When the vehicle 181a and the vehicle 181b are selected as the vehicles to be always stationed in the business establishment 11, the vehicle control apparatus 61 assigns the item to be delivered to the delivery destination in the area A, to the vehicle 181c and the vehicle 181d, other than the vehicle 181a and the vehicle 181b, based on the delivery destination address. For example, as shown in Fig. 16, the vehicle control apparatus 61 assigns, to the vehicle 181c, four items among five items whose delivery destinations are the area A, and one item among five items whose delivery destinations are the area B, and the item whose delivery destination is the area C. In addition, the vehicle control apparatus 61 assigns, to the vehicle 181d, one item among five items whose delivery destinations are the area A, and four items among five items whose delivery destinations are the area B, and the item whose delivery destination is the area D. In this manner, as shown in Fig. 17, the areas covered by the vehicle 181c and the vehicle 181d are determined. The vehicle control apparatus 61 reschedules the vehicle dispatch plan for the day and the subsequent days based on the delivery destinations of the items assigned to the vehicle 181c and the vehicle 181d; and respectively decides the travel routes, the departure times, and the return times of the vehicle 181c and the vehicle 181d. This makes it possible for the power control apparatus 41 to control the charging and discharging of the battery for traveling of the vehicle 181a and the battery for traveling of the vehicle 181b, the vehicle 181a and the vehicle 181b being always stationed in the business establishment 11, so as to meet at least a part of the power demand of the business establishment 11.

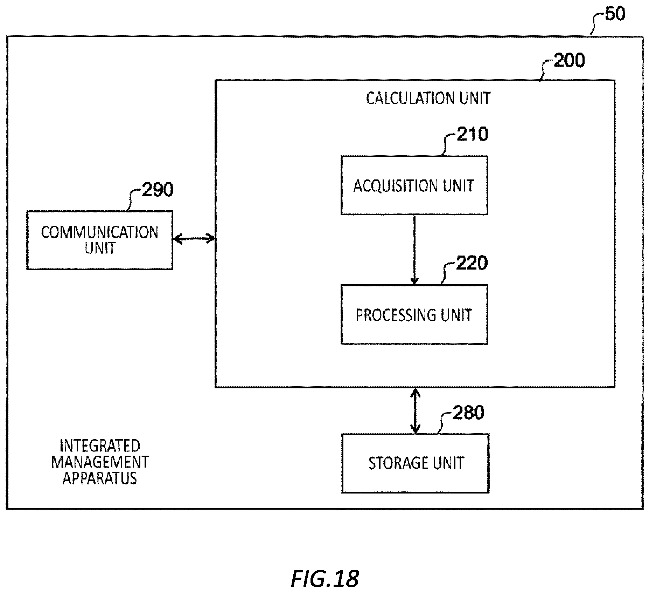

Next, with reference to Fig. 18 to Fig. 30, an embodiment of a control to meet the power demand and the delivery demand in the business establishment 11, by the movement of the vehicle 110, will be described.

Fig. 18 schematically shows a system configuration of the integrated management apparatus 50. The integrated management apparatus 50 includes a calculation unit 200, a storage unit 280, and a communication unit 290. The calculation unit 200 includes an acquisition unit 210 and a processing unit 220.

The calculation unit 200 is realized by, for example, a calculation processing apparatus including a processor. The storage unit 280 is realized to include a non-volatile storage medium. The calculation unit 200 performs processing by using the information stored in the storage unit 280. The communication unit 290 is responsible for a communication with the power control apparatuses 40 to 44, the vehicle control apparatus 60, and the vehicle 110. The calculation unit 200 communicates with the outside through the communication unit 290.

The acquisition unit 210 acquires (I) a first demand which is sent from an energy management apparatus that manages energy, and which includes an amount of demand, a demand time, and a demand position in relation to an energy demand, and (II) a second demand which is sent from a moving body management apparatus that manages a moving body, and which includes an amount of demand, a demand time, and a demand position in relation to a demand of the moving body. The processing unit 220 performs at least one of processing for deciding a position and a time at which the moving body moves, or processing for determining whether both demands of the first demand and the second demand can be met, based on the first demand and the second demand that are acquired by the acquisition unit 210. It should be noted that the power control apparatus 40 and the power control apparatuses 42 to 44 are an example of the energy management apparatus. The power control apparatus 40 and the power control apparatuses 42 to 44 manage and control the electric power as an example of the energy; however, the power control apparatus 40 and the power control apparatuses 42 to 44 may manage the electric power without controlling the electric power. The vehicle control apparatus 60 is an example of the moving body management apparatus. The vehicle control apparatus 60 manages and controls the vehicle 110 as an example of the moving body; however, the vehicle control apparatus 60 may manage the vehicle 110 without controlling the vehicle 110.

The processing unit 220 may manage first supply information that the moving body is able to further provide a supply over the amount of demand included in the first demand, and second supply information that the moving body is able to further provide a supply over the amount of demand indicated by the second demand; and may re-decide the position and the time at which the moving body moves according to the first demand and the second demand newly acquired by the acquisition unit 210.

When it is determined that both demands of the first demand and the second demand cannot be met, the processing unit 220 may decide the position and the time at which the moving body moves by giving a priority to one of the first demand and the second demand over the other.

When it is determined that both demands of the first demand and the second demand cannot be met, the processing unit 220 may decide the position and the time at which the moving body moves, to meet at least the second demand and to meet at least the amount of demand and the demand time at some predetermined demand position among a plurality of demand positions that are included in the first demand.

The processing unit 220 may decide the position and the time at which the moving body moves, based on the first demand, and determine whether the second demand is met, based on the position and the time at which the moving body moves and which are decided based on the first demand.

After the moving body starts moving based on the position and the time at which the moving body moves and which are decided based on the first demand and the second demand, the processing unit 220 may re-decide the position and the time at which the moving body moves, each time a predetermined condition is met.

The processing unit 220 may re-decide the position and the time at which the moving body moves, each time the moving body arrives at the demand position. The processing unit 220 may re-decide the position and the time at which the moving body moves, each time the moving body departs from the demand position.

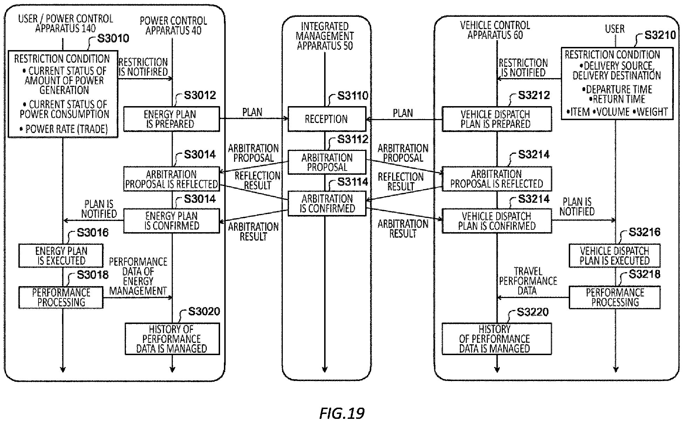

Fig. 19 shows an overview of an overall system execution sequence in relation to a movement of the vehicle 110 in the control system 100. A processing flow of each unit will be described with reference to Fig. 19. The processing in Fig. 19 represents the processing from preparing, on a day before, the power plan and the vehicle dispatch plan for the next day, to executing the plan according to the prepared plan.

As the processing in relation to the power control apparatus 40, in S3010, at least one of the user of the power control apparatus 40 or the power control apparatus 140 sets the restriction condition in relation to the power plan in the base 10 and the business establishments 11 to 14, and notifies the power control apparatus 41 of the set restriction condition. It should be noted that the "user" is a user, a system, or the like that manages the power control apparatus 40. In S3010, the user sets the restriction condition in relation to the power plan, and notify the power control apparatus 40 of the set restriction condition. The restriction condition is a condition which becomes a restriction for the preparation of the power plan. The restriction condition may include a restriction which is required to meet the power demand. The restriction condition includes, for example, information in relation to a current status of the amount of power generation, a current status of an amount of power consumption, and a power rate. The amount of power generation is, for example, amounts of power generation in the power generation apparatuses 20 to 24. The amount of power consumption is an amount of power consumption in each of the base 10 and the business establishments 11 to 14. The power rate includes a power purchase price and a power selling price. The power purchase price is, for example, a condition in relation to an amount of money which is charged to each of the base 10 and the business establishments 11 to 14 as the consideration for receiving the power from the system. The power selling price is, for example, a condition in relation to an amount of money which is obtained by each of the base 10 and the business establishments 11 to 14 as the consideration for supplying the power to the system.

In S3012, the power control apparatus 40 prepares the power plan for the next day. For example, the power control apparatus 40 prepares the power plan for each of the base 10 and the business establishments 11 to 14. The power control apparatus 40 may acquire the power plans prepared by the power control apparatus 41 to the power control apparatus 44. The power plan includes the amount of power generation, the amount of power storage, and the power consumption for each time window of a day. The power plan is, for example, the power plan for the next day. By the power plan, for each time window in each of the base 10 and the business establishments 11 to 14, how much the power is generated, how much the power is consumed, how much the stationary battery is charged, or how much the power is discharged from the stationary battery are determined. The amount of power generation for each time window for the next day may be predicted from environmental information such as weather information for the next day and performance data in the past. The power plan may indicate in which time window suppression of the power consumption is to be executed (a peak cut), in each of the base 10 and business establishments 11 to 14. The power plan may indicate how much power is to be received from the outside in which time window, in each of the base 10 and business establishments 11 to 14.

The power control apparatus 40 may prepare the optimal power plan for each of the base 10 and the business establishments 11 to 14. For example, the power control apparatus 40 may prepare the power plan to minimize the amount of power which is received from the system, in each of the base 10 and the business establishments 11 to 14. The power control apparatus 40 may prepare the power plan to minimize the amount of money which is charged to each of the base 10 and the business establishments 11 to 14 as the consideration for receiving the power from the system. The power control apparatus 40 may prepare the power plan to maximize the amount of money which is obtained by each of the base 10 and the business establishments 11 to 14 as the consideration for supplying the power to the system. In this way, the power control apparatus 40 prepares the optimal power plan as the power plan for the next day, based on the restriction condition. By the power plan, the amount of power which is required to be received from the outside for each time window for the next day, is determined. As described below, the amount of power which is required to be received from the outside can be supplied from the battery for traveling of the vehicle 110. The power control apparatus 40 transmits the power plan to the integrated management apparatus 50.

As the control in relation to the vehicle control apparatus 60, the user of the vehicle control apparatus 60 inputs the restriction condition for the vehicle dispatch, in S3210. A user of the vehicle control apparatus 60 is a person, a system, or the like that inputs the delivery demand data in a delivery company. The restriction condition for the vehicle dispatch may include a restriction which is required to meet the delivery demand. The restriction condition for the vehicle dispatch is a condition which becomes a restriction for the preparation of the vehicle dispatch plan. The restriction condition for the vehicle dispatch includes, for example, the delivery source and the delivery destination, the departure time and the return time, and a type of the item as the load, a volume of the item, a weight of the item, and the like. By the delivery source and the delivery destination, from which place to which place the vehicle is required to be operated is determined. From the departure time and the return time, from which place and at which time the vehicle is required to depart, and to which place and at which time the vehicle is required to return, are determined. The departure time may be a time when the vehicle departs from the base 10, and the return time may be a time when the vehicle returns to the base 10. A time width in which a change can be allowed may be set to the departure time and the return time. Which vehicle can deliver the items is determined from types, volumes, and weights of the items.

In S3212, the vehicle control apparatus 60 prepares the delivery plan for the next day based on the restriction condition notified by the user. For example, the vehicle control apparatus 60 decides the number of vehicles 110 that are used for the deliveries, the vehicle 110 that is used for the delivery of the item, the departure time and the arrival time in the base 10 and the business establishments 11 to 14, the travel route of the vehicle 110, the travel speed of the vehicle 110, and the stand to be subjected to the supplementary charging among the stands 71 to 74, so as to meet the delivery demand which is determined by the restriction condition for the vehicle dispatch. The vehicle control apparatus 60 transmits the vehicle dispatch plan to the integrated management apparatus 50.

In S3110, the integrated management apparatus 50 receives the power plan transmitted from power control apparatus 41 and the vehicle dispatch plan transmitted from vehicle control apparatus 60.

In S3112, the integrated management apparatus 50 arbitrates the power plan and the vehicle dispatch plan. For example, when the vehicle is dispatched according to the vehicle dispatch plan, the integrated management apparatus 50 determines whether the power plan is met. For example, periods during which the vehicles 110 are predicted to be present in the base 10 and the business establishments 11 to 14 are determined, from the vehicle dispatch plan. When it is predicted that the business establishments 11 to 14 can receive, in required time windows, the power required to be supplied from the outside, from the batteries for traveling of the vehicles 110, in the periods during which the vehicles 110 are present in the base 10 and the business establishments 11 to 14, the integrated management apparatus 50 determines that the power plan is met. In addition, in the business establishments 11 to 14 that are movement destinations of the vehicles 110, when each of the business establishments 11 to 14 can supply, in the time window required to discharge the power, the power which is required to be discharged to the outside, to the battery for traveling of the vehicle 110, the integrated management apparatus 50 determines that the power plan is met.

In the case where it is determined that the power plan cannot be met when the vehicle is dispatched according to the vehicle dispatch plan, the integrated management apparatus 50 determines how the power plan can be corrected to meet the vehicle dispatch plan. For example, the integrated management apparatus 50 determines how much power consumption needs to be changed for each time window, for the power plan, in each of the base 10 and business establishments 11 to 14. In addition, the integrated management apparatus 50 determines how much amount of power generation which is received from the system for each time window, needs to be changed in each of the base 10 and business establishments 11 to 14. The integrated management apparatus 50 determines how much amount of power generation which is discharged to the system for each time window, needs to be changed in each of the base 10 and business establishments 11 to 14.

In addition, in the case where it is determined that the power plan cannot be met when the vehicle is dispatched according to the vehicle dispatch plan, the integrated management apparatus 50 determines how the vehicle dispatch plan can be corrected to meet the power plan. For example, the integrated management apparatus 50 determines how much the departure time and the return time need to be changed, for the vehicle dispatch plan received from the vehicle control apparatus 60, in each of the base 10 and business establishments 11 to 14. In addition, the integrated management apparatus 50 determines how the travel route of the vehicle 110 needs to be corrected, for the vehicle dispatch plan. In addition, the integrated management apparatus 50 determines how much the number of vehicles 110 that are used for the deliveries, needs to be corrected, for the vehicle dispatch plan. In addition, the integrated management apparatus 50 determines at which stand among the stands 71 to 74 and at which time the supplementary charging needs to be performed for the base 10, for the vehicle dispatch plan. In addition, the integrated management apparatus 50 determines how much the travel speed of the vehicle 110 needs to be corrected, for the vehicle dispatch plan.

In addition, in the case where it is determined that the power plan cannot be met when the vehicle is dispatched according to the vehicle dispatch plan, the integrated management apparatus 50 determines how both of the power plan and the vehicle dispatch plan can be corrected such that the vehicle dispatch plan and the power plan which are corrected are met. As described above, in each of the base 10 and business establishments 11 to 14, the integrated management apparatus 50 determines: how the power consumption for each time window, the amount of power which is received from the system for each time window, and the amount of power which is discharged to the system for each time window, need to be corrected; and how the departure time, the return time, the travel route, the travel speed, the number of vehicles 110 that are used for the delivery, and the stand at which the supplementary charging is performed, need to be corrected.

In S3112, the integrated management apparatus 50 transmits an arbitration proposal including the corrections for the power plan and the vehicle dispatch plan, to the power control apparatus 40 and the integrated management apparatus 50. When the arbitration proposal is received from the integrated management apparatus 50, the power control apparatus 40 reflects, in the power plan prepared in S3012, the arbitration proposal received from the integrated management apparatus 50, in S3014. For example, for the power plan, the power control apparatus 40 corrects, according to the arbitration proposal, the power consumption for each time window, the amount of power which is received from the system for each time window, the amount of power which is discharged to the system for each time window, and the like, in each of the base 10 and business establishments 11 to 14. When it is determined that the energy management in the base 10 and the business establishments 11 to 14 can be realized according to the arbitration proposal, the power control apparatus 40 transmits the power plan in which the arbitration proposal is reflected, to the integrated management apparatus 50, as the reflection result.

Similarly, when the arbitration proposal is received from the integrated management apparatus 50, the vehicle control apparatus 60 reflects, in the vehicle dispatch plan prepared in S3212, the arbitration proposal received from the integrated management apparatus 50, in S3214. For example, for the vehicle dispatch plan, the vehicle control apparatus 60 corrects, according to the arbitration proposal, the departure time, the return time, travel route, travel speed, the number of vehicles 110 used for the delivery, the stand at which the supplementary charging is performed, or the like. When it is determined the delivery demand is met according to the arbitration proposal, the vehicle control apparatus 60 transmits the vehicle dispatch plan in which the arbitration proposal is reflected, to the integrated management apparatus 50, as the reflection result.

In S3114, when the reflection result of the arbitration proposal is received from the power control apparatus 40 and the vehicle control apparatus 60, the integrated management apparatus 50 checks that the delivery demand and the power demand are met by the power plan and vehicle dispatch plan in which the arbitration proposal is reflected. When the vehicle dispatch demand and the power demand are checked to be met, the integrated management apparatus 50 transmits, as the arbitration result, a message that the plan is executed according to the reflection result of the arbitration proposal, to the power control apparatus 40 and the vehicle control apparatus 60. It should be noted that when the delivery demand and the power demand are not met by the power plan and the vehicle dispatch plan in which the arbitration proposal is reflected, the integrated management apparatus 50 may further correct the power plan and the vehicle dispatch plan to transmit the power plan and the vehicle dispatch plan that are corrected, as the arbitration result. The power control apparatus 41, the vehicle control apparatus 60, and the vehicle control apparatus 60 may repeat the processing of S3112, S3014, S3214, and S3114 until the delivery demand and the power demand are met.

When the arbitration result is received from the integrated management apparatus 50, the power control apparatus 40 confirms the power plan in S3014, and notifies the user of the confirmed power plan. In S3016, the user performs the energy management according to the notified power plan. In S3018, the user performs the performance processing in relation to the execution of the power plan. For example, the user performs the processing of collecting and inputting the performance data of the energy management which includes the performance data of the amounts of charging and discharging the stationary battery, the performance data of the power generation, and the performance data of the amount of power consumption, for each time window. In S3020, the power control apparatus 40 manages the performance data which is input from each user as the history information. It should be noted that the power control apparatus 40 may use the history information managed by the power control apparatus 40 in the case of preparing the power plan later.

In addition, when the arbitration result is received from the integrated management apparatus 50, the vehicle control apparatus 60 confirms the vehicle dispatch plan, in S3214, and notifies the user of the confirmed vehicle dispatch plan. In S3216, the user executes the plan according to the notified vehicle dispatch plan. In S3218, the user performs the performance processing in relation to the execution of the vehicle dispatch plan. For example, the user performs processing including the process of collecting and inputting travel performance data including travel data of each vehicle 110, the remaining capacity of the battery for traveling, or the like. In S3020, the vehicle control apparatus 60 manages the travel performance data which is input from the user, as the history information. It should be noted that the vehicle control apparatus 60 may use the history information managed by the vehicle control apparatus 60 in the case of preparing the vehicle dispatch plan later.

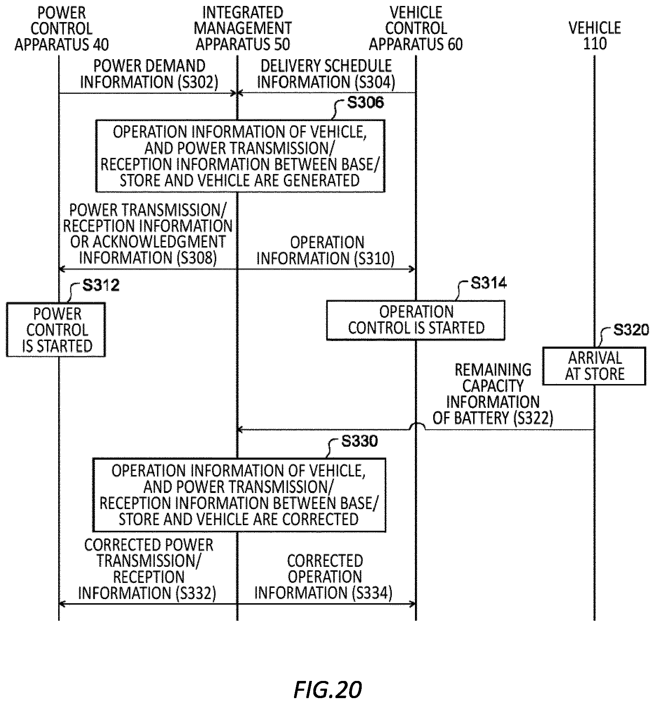

Fig. 20 shows execution sequences of processing which are executed by the integrated management apparatus 50, the power control apparatus 40, and the vehicle control apparatus 60, and the vehicle 110 in an emergency mode. In S302, the power control apparatus 40 transmits the power demand information to the integrated management apparatus 50. For example, the power control apparatus 40 predicts the power generation of the power generation apparatus 20 for the next day, and the power consumption for the next day in the base 10. As an example, the power control apparatus 40 stores the history information in which the power generation of the power generation apparatus 20 in the past, and the power consumption in the base 10 in the past are associated with the weather information. The power control apparatus 40 predicts the power generation of the power generation apparatus 20 for the next day and the power consumption for the next day, based on the weather forecast information for the next day and the history information. For example, the power control apparatus 40 acquires, from the history information, information which is associated with the weather information conforming to the weather information indicated by the weather forecast information for the next day, thereby predicting the power generation of the power generation apparatus 20 for the next day and the power consumption for the next day. Similarly, the power control apparatuses 41 to 45 predict the power generation and power consumption for the next day in the respective business establishments. The power control apparatus 40 receives the power demand information including the information indicating the power generation and the power consumption for the next day predicted by each of the power control apparatuses 41 to 45, and transmits the power demand information of the power control apparatuses 40 to 45, to the integrated management apparatus 50.

In S304, the vehicle control apparatus 60 transmits, to the integrated management apparatus 50, the delivery schedule information on the item to the business establishments 11 to 14 for the next day. For example, the vehicle control apparatus 60 acquires the delivery information, based on a product delivery request for the next day acquired from each of the business establishments 11 to 14. Specifically, the vehicle control apparatus 60 acquires, as a delivery request, the item information for the delivery for the next day, and the information for identifying the business establishment of the delivery destination. The item information includes information on a quantity of the items to be delivered to each business establishment, the weight of each item, the delivery time information indicating the time which is desired by the business establishment for the delivery, or the like. In addition, the vehicle control apparatus 60 manages vehicle information including the number of the vehicles 110, and the current remaining capacity of the battery for traveling of the vehicle 110. The vehicle control apparatus 60 transmits, to the integrated management apparatus 50, the delivery information including the delivery schedule information for the next day and the vehicle information.

In S306, the processing unit 220 performs the processing in relation to the operation control of the vehicle 110 and the control of the power control apparatuses 41 to 44, based on the delivery information and the power demand information. For example, the processing unit 220 generates the operation information including the position and time at which the vehicle 110 moves between the business establishments 11 to 14, and the travel route of the vehicle 110. In addition, the processing unit 220 generates the power transmission/reception information between the battery for traveling of the vehicle 110, and the base 10 and the business establishments 11 to 14, in the base 10 and the business establishments 11 to 14. The power transmission/reception information includes, for example, a time for performing the power transmission/reception and an amount of power transmission/reception. The processing of S306 will be described below. In S308, the processing unit 220 transmits the power transmission/reception information to the power control apparatuses 40 to 44. It should be noted that the processing unit 220 transmits, to the power control apparatuses 40 to 44 of the base 10 and business establishments 11 to14 decided not to transmit and receive the power, acknowledgment information indicating that the control is acknowledged based on the power demand information generated by each of the power control apparatuses 40 to 44. In S310, the processing unit 220 transmits the operation information to the vehicle control apparatus 60.

In S312, the power control apparatuses 40 to 44 respectively start the power controls in the base 10 and the business establishments 11 to 14. In S314, the vehicle control apparatus 60 starts the operation control of the vehicle 110 according to the operation information. For example, the vehicle control apparatus 60 instructs a driver of the vehicle 110 in the base 10 to cause the vehicle 110 to depart from the base 10 according to the operation information.

When the vehicle 110 arrives at the business establishment 11 in S320, the processing unit 220 determines that the vehicle 110 has arrived at the business establishment 11, by position information based on a GPS signal transmitted from the vehicle 110. In S322, the processing unit 220 communicates with the vehicle 110 and receives the remaining capacity information of the battery for traveling of the vehicle 110. In S330, the processing unit 220 corrects the operation information of the vehicle 110 and the power transmission/reception information in the base 10 and the business establishments 11 to 14, based on the currently predicted weather forecast information and the remaining capacity information of the battery of the vehicle 110. The specific processing of S330 will be described below. In S332, the processing unit 220 transmits the corrected power transmission/reception information to the power control apparatuses 40 to 44. In S334, the processing unit 220 transmits the operation information to the vehicle control apparatus 60. It should be noted that the vehicle 110 repeats the processing similar to the processing from S320 to S334 each time when the vehicle 110 arrives at the business establishments 11 to 14. Accordingly, the power transmission/reception information and the operation information can be updated, based on the latest information.

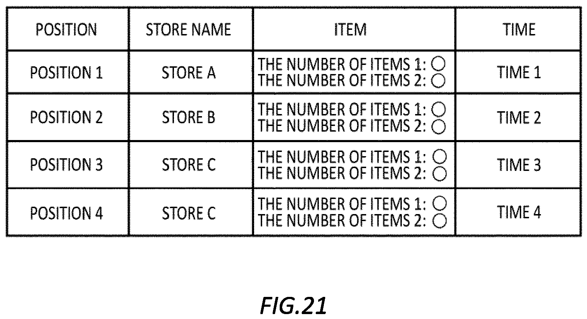

Fig. 21 shows an example of a data structure of delivery information which is managed by the processing unit 220. The delivery information is generated based on the delivery schedule information which is transmitted from each of the business establishments 11 to 14. The delivery information includes a position, a business establishment name, an item, and a time. The "position" is information indicating a geographical position of each business establishment. The "position" may include, for example, an address, and latitude and longitude information. The "business establishment name" is information indicating a name of the business establishment. The "item" is item information indicating the item to be delivered to each business establishment. The item information includes information indicating the number of the respective products to be delivered to the business establishments 11 to 14. The "time" is information indicating a time which is desired by each of the business establishments 11 to 14 for the delivery of the product. The processing unit 220 decides the operation information of the vehicle 110 such that the item can be delivered by the time which is desired by each of the business establishments 11 to 14.

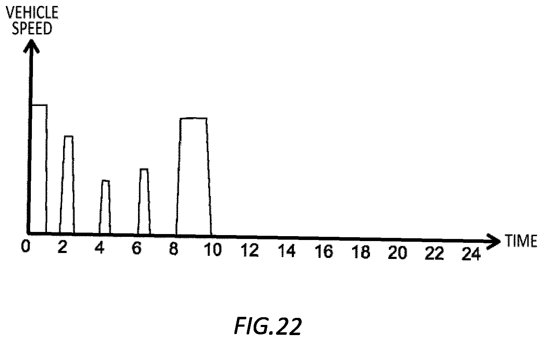

Fig. 22 schematically shows a change in vehicle speed of the vehicle 110 from a departure from the base 10 to a return to the base 10 via the business establishments 11 to 14. A graph of Fig. 22 represents the vehicle speed by which the vehicle departs from the base 10 at 0:00, and arrives at the business establishment 11 at 1:00; departs from the business establishment 11 at 2:00, and arrives at the business establishment 12 at 2:30; departs from the business establishment 12 at 4:00, and arrives at the business establishment 13 at 4:30, departs from the business establishment 13 at 6:00, and arrives at the business establishment 14 at 6:30; and departs from the business establishment 14 at 8:00, and returns to the base 10 at 10:00.

In a case of deciding the operation information, the processing unit 220 refers to the delivery information, and decides the travel route and the vehicle speed for traveling of the vehicle 110 between the base 10 and the business establishments 11 to 14, respectively, so as to meet the delivery schedule information and to minimize the power consumption required for traveling of the vehicle 110 for the next day. As an example, based on traffic congestion information of the road which is predicted for the next day, gradient information of the road, signal information, or the like, the processing unit 220 may decide the travel route and the vehicle speed for traveling on the travel route, so as to minimize the power consumption required for traveling of the vehicle 110. When the processing unit 220 transmits, to the vehicle control apparatus 60, the operation information including the travel route and the vehicle speed information, the vehicle control apparatus 60 instructs the driver of the vehicle 110 through a navigation apparatus included in the vehicle 110 such that the vehicle 110 travels according to the travel route and the vehicle speed information.

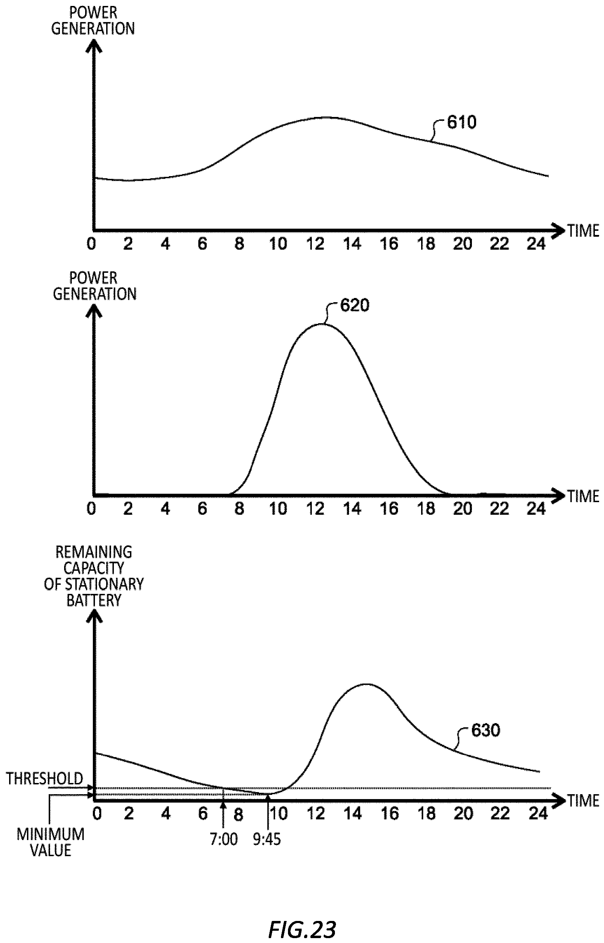

Fig. 23 is a graph schematically showing predicted values of temporal changes in power consumption, power generation, and remaining capacity of a stationary battery, for the next day for each of the base 10 and the business establishments 11 to 14. The horizontal axis of each graph in Fig. 23 represents a time in a day. A line 610 in Fig. 23 indicates an example of the temporal change in the predicted power consumption in the base 10 and the business establishments 11 to 14. A line 620 in Fig. 23 indicates an example of the temporal change in the predicted power generation of the power generation apparatuses 20 to 24. For example, the power control apparatuses 40 to 44 may predict the power consumption and the power generation for the next day, based on a correlation between the weather and the power consumption in the past, and the weather forecast information for the next day.

As a part of the power management, respectively, the power control apparatuses 40 to 44 cause the stationary batteries 30 to 34 to be charged with surplus power when the power generation exceeds the power consumption, and cause the stationary batteries 30 to 34 to be discharged when the power consumption exceeds the power generation, thereby covering at least a part of the power consumption. In this manner, the power control apparatuses 40 to 44 perform the control to perform a peak shift of the power consumption.

In the stationary batteries 30 to 34, as a lower limit value of the remaining capacity of the battery, a threshold is set in advance. The power control apparatuses 40 to 44 restrict the discharging of the stationary batteries 30 to 34 such that the remaining capacity of the battery does not fall below the threshold set in advance. A line 630 in Fig. 23 indicates the change in the remaining capacity of the battery in a case where the stationary batteries 30 to 34 are assumed to be discharged according to the power consumption when the power consumption exceeds the power generation. As indicated by the line 630 in Fig. 23, the remaining capacity of the battery reaches the threshold at 7:00 and reaches a minimum value at 9:45. Accordingly, in a case where the power consumption, the power generation, and the remaining capacity of the battery are predicted as shown in Fig. 23, for example, when the stationary battery can be supplied with the power equal to or more than the amount of power corresponding to the minimum value of the remaining capacity of the battery by 7:00, it is possible to cover the power consumption by the discharge of the stationary battery and the power generation. Accordingly, when the power consumption, the power generation, and the remaining capacity of the battery are predicted as shown in Fig. 23, the processing unit 220 decides the operation information such that the power can be supplied from the vehicle 110 to the stationary battery by 7:00.

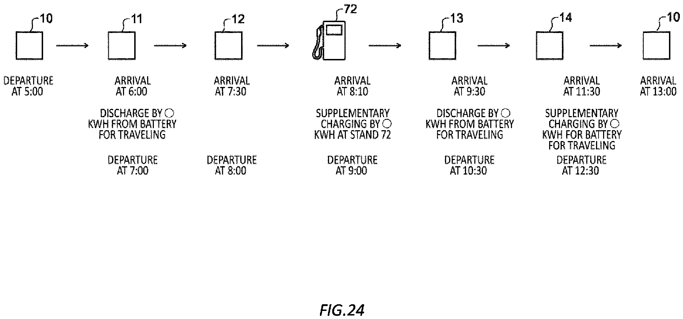

Fig. 24 schematically shows a control of the vehicle 110 based on operation information and power transmission/reception information. The processing unit 220 generates the operation information including the departure time from the base 10, the arrival times and the departure times at and from the business establishments 11 to 14, the arrival time at the base 10, and the vehicle speeds of the vehicle 110 between the base 10 and the business establishments 11 to 14. In addition, when the battery for traveling is subjected to the supplementary charging at the stands 71 to 74, the operation information including the arrival time and the departure time at and from the stand at which the supplementary charging is performed is generated. In addition, the processing unit 220 generates the power transmission/reception information including the time for transmitting and receiving the power and the amount of power between the base 10 and the business establishments 11 to 14, respectively.

For example, in the business establishment 11, when the power consumption, the power generation, and the remaining capacity of the battery are predicted as shown in Fig. 23, the operation information is decided such that the amount of power required for the business establishment 11 can be supplied from the vehicle 110 by 7:00. The vehicle 110 departs from the base 10 at 5:00 and arrives at the business establishment 11 at 6:00, and then, while the item to be delivered to the business establishment 11 is unloaded from the vehicle 110, the processing unit 220 causes the battery for traveling of the vehicle 110 to be discharged, thereby deciding the operation information such that the required amount of power can be supplied to the business establishment 11 by 7:00.

In addition, when the amount of power in the stationary battery 33 is predicted to be insufFicient in the business establishment 13 as well, the battery for traveling is subjected to the supplementary charging at the stand 72 in traveling on a way from the business establishment 12 to the business establishment 13, and after the arrival at the business establishment 13, while the item to be delivered to the business establishment 13 is unloaded from the vehicle 110, the processing unit 220 decides the operation information such that the battery for traveling of the vehicle 110 is discharged for the power to be able to be supplied to the business establishment 13. In addition, when a surplus of power is predicted in the business establishment 14, the processing unit 220 performs the supplementary charging on the battery for traveling with the power which is supplied from the power generation apparatus 24 or the stationary battery 34 in the business establishment 14, after the arrival at the business establishment 14, while the item to be delivered to the business establishment 14 is unloaded from the vehicle 110.

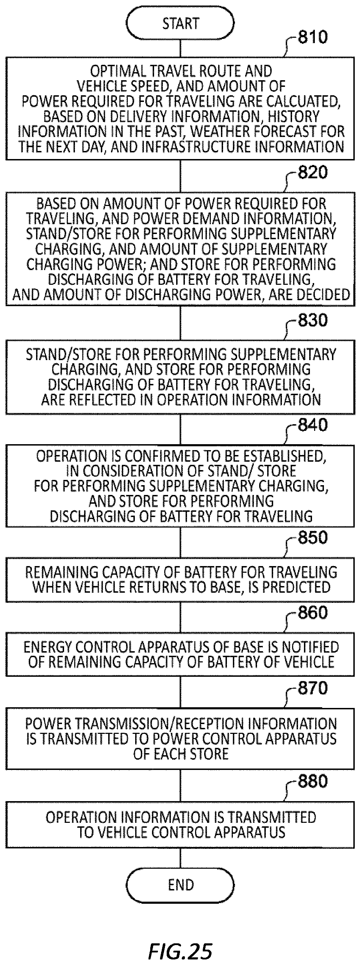

Fig. 25 is a flowchart showing details of processing from S306 to S310 in Fig. 20. The processing of the flowchart of Fig. 25 is executed on the day before the vehicle 110 departs from the base 10. For example, the processing of the flowchart of Fig. 25 may be executed between 23:00 and 0:00 on the day before the vehicle 110 departs from the base 10.

The processing unit 220 refers to the delivery information, and decides the operation information including the travel route and the vehicle speed of the vehicle 110, the departure time from the base 10, the arrival time at each of the business establishments and the departure time from each of the business establishments in the business establishments 11 to 14, and the arrival time at the base 10, so as to meet the delivery time of the item that is desired by each of the business establishments 11 to 14 and to minimize the amount of power required for traveling of the vehicle 110. At this time, based on infrastructure information including traffic congestion forecast information, the processing unit 220 decides the operation information to minimize the amount of power required for traveling of the vehicle 110.

In S820, based on the amount of power required for traveling of the vehicle 110 according to the operation information, and the power demand information, the processing unit 220 decides the stand and the business establishment for performing the supplementary charging of the battery for traveling, and the amount of supplementary charging power; and the business establishment for performing the discharging of the battery for traveling, and the amount of discharging power. For example, from the operation information, the time when the vehicle 110 is predicted to be stopped at each of the business establishment 11 to business establishment 14, is determined. In addition, from the power demand information, it is determined whether there occurs a surplus of power or a shortage of power during the time when the vehicle 110 is predicted to be stopped at each of the business establishments 11 to 14. Therefore, in a case where there is a surplus of power, while the vehicle 110 is stopped at each of the business establishments 11 to 14, during the time when the vehicle 110 is predicted to be stopped at each of the business establishments 11 to 14, the processing unit 220 determines that the supplementary charging is possible while the vehicle is stopped at the business establishments 11 to 14. In addition, based on the travel route of the vehicle 110 and the positions where the stand 71 to the stand 74 are installed, the processing unit 220 determines that the supplementary charging is possible at the stands 71 to 74 when the stands 71 to 74 are installed within a predetermined distance from the travel route. In addition, in a case where there is a shortage of power in each of the business establishments 11 to 14, the processing unit 220 determines that the battery for traveling is able to be discharged while the vehicle 110 is stopped at the business establishments 11 to 14.

In S830, the stands 71 to 74 and the business establishments 11 to 14 for performing the supplementary charging, and the business establishments 11 to 14 for performing the discharging, are reflected in the operation information. In S840, the operation of the vehicle 110 is confirmed to be established, in consideration of the stands 71 to 74 and the business establishments 11 to 14 for performing the supplementary charging, and the business establishments 11 to 14 for performing the discharging. In S850, the processing unit 220 predicts the remaining capacity of the battery for traveling of the vehicle 110 when the vehicle 110 returns to the base 10 according to the operation information. In S860, the processing unit 220 notifies the power control apparatus 40 of the base 10 of the remaining capacity of the battery predicted in S850. In S870, the processing unit 220 transmits the power transmission/reception information in relation to the battery for traveling of the vehicle 110, to the power control apparatuses 41 to 44 of each of the business establishments 11 to 14, through the power control apparatus 40. In S880, the processing unit 220 transmits the operation information to the vehicle control apparatus 60.

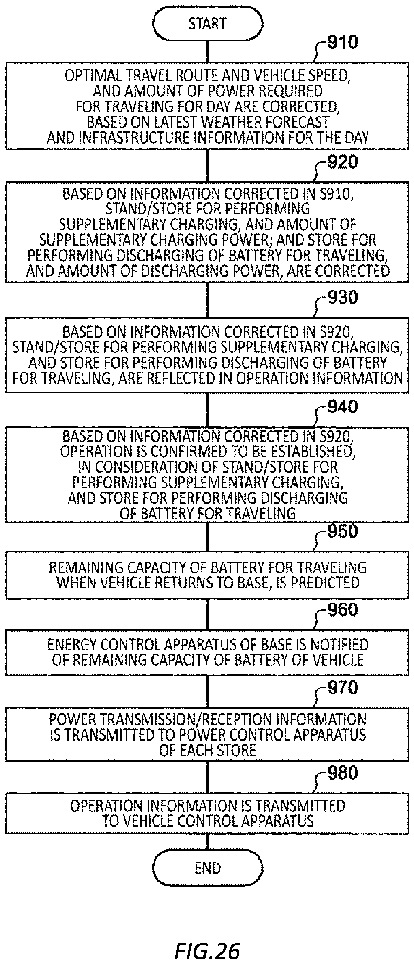

Fig. 26 is a flowchart showing processing which is executed in a day when the vehicle 110 departs from the base 10. The processing unit 220 corrects the operation information including the travel route and the vehicle speed of the vehicle 110, and the amount of power required for traveling of the vehicle 110, based on the latest weather forecast information and the infrastructure information at a timing a predetermined time before the time when the vehicle 110 departs from the base 10. In S920, based on the information corrected in S910, the processing unit 220 corrects the stand and the business establishment for performing the supplementary charging of the battery for traveling, and the amount of supplementary charging power; and the business establishment for performing the discharging of the battery for traveling, and the amount of discharging power.

In S930, based on the information corrected in S920, the processing unit 220 reflects, in the operation information, the stands 71 to 74 and the business establishments 11 to 14 for performing the supplementary charging, and the business establishments 11 to 14 for performing the discharging. In S940, based on the information corrected in S920, the processing unit 220 confirms that the operation of the vehicle 110 is established, in consideration of the stands 71 to 74 and the business establishments 11 to 14 for performing the supplementary charging, and the business establishments 11 to 14 for performing the discharging. In S950, the processing unit 220 predicts the remaining capacity of the battery for traveling of the vehicle 110 when the vehicle 110 returns to the base 10 according to the corrected operation information. In S960, the processing unit 220 notifies the power control apparatus 40 of the base 10 of the remaining capacity of the battery predicted in S950. In S970, the processing unit 220 transmits the power transmission/reception information in relation to the battery for traveling of the vehicle 110, to the power control apparatuses 41 to 44 of each of the business establishments 11 to 14. In S980, the processing unit 220 transmits the operation information to the vehicle control apparatus 60.

By the processing described with reference to Fig. 26, the operation information and the power transmission/reception information of the vehicle 110 can be updated based on the latest information before the vehicle 110 departs from the base 10.

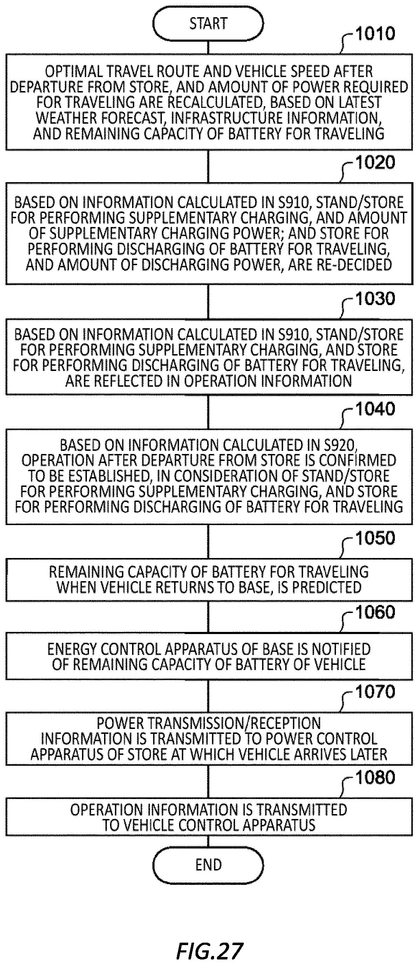

Fig. 27 is a flowchart showing processing which is executed when the vehicle 110 arrives at the business establishments 11 to 14. The processing of the flowchart of Fig. 27 can be applied to the processing from S330 to S334 of Fig. 20. Here, a case where the vehicle 110 arrives at the business establishment 11 is taken to be described. When the arrival at the business establishment 11 is determined based on the current position information of the vehicle 110 received from the vehicle 110, the processing unit 220 recalculates, in S1010, the operation information including the travel route and the vehicle speed of the vehicle 110 after the departure from the business establishment 11, and the amount of power required for the traveling of the vehicle 110, based on the latest weather forecast information, the infrastructure information, and the remaining capacity of the battery for traveling of the vehicle 110. In S1020, based on the information recalculated in S1010, the processing unit 220 re-decides the stand and the business establishment for performing the supplementary charging of the battery for traveling, and the amount of supplementary charging power; and the business establishment for performing the discharging of the battery for traveling, and the amount of discharging power.

In S1030, based on the information decided in S1020, the processing unit 220 reflects, in the operation information, the stands 71 to 74 and the business establishments 12 to 14 for performing the supplementary charging, and the business establishments 12 to 14 for performing the discharging. In S1040, based on the information decided in S1020, the processing unit 220 confirms that the operation of the vehicle 110 is established, in consideration of the stands 71 to 74 and the business establishments 12 to 14 for performing the supplementary charging, and the business establishments 12 to 14 for performing the discharging. In S1050, the processing unit 220 re-predicts the remaining capacity of the battery for traveling of the vehicle 110 when the vehicle 110 returns to the base 10 according to the decided operation information. In S1060, the processing unit 220 notifies the power control apparatus 40 of the base 10 of the remaining capacity of the battery predicted in S1050. In S1070, the processing unit 220 transmits the power transmission/reception information in relation to the battery for traveling of the vehicle 110, to each of the power control apparatuses 42 to 44 of the business establishments 12 to 14. In S1080, the processing unit 220 transmits the operation information to the vehicle control apparatus 60.

Processing similar to the processing described with reference to Fig. 27 is executed each time vehicle 110 arrives at the business establishment 12, the business establishment 13, and the business establishment 14. This makes it possible to update the operation information and the power transmission/reception information of the vehicle 110 based on the latest information.

It should be noted that the processing when the vehicle 110 arrives at the business establishments 11 to 14 has been described with reference to S330 of Fig. 20 and Fig. 27. The processing unit 220 may execute processing similar to the processing described with reference to S303 of Fig. 20 and Fig. 27, in a case where the vehicle 110 departs from the business establishments 11 to 14. For example, in a case where the vehicle 110 arrives at the business establishment 11, and then an ignition switch of the vehicle 110 is turned on, the processing unit 220 may execute the processing similar to the processing described with reference to S303 of Fig. 20 and Fig. 27.

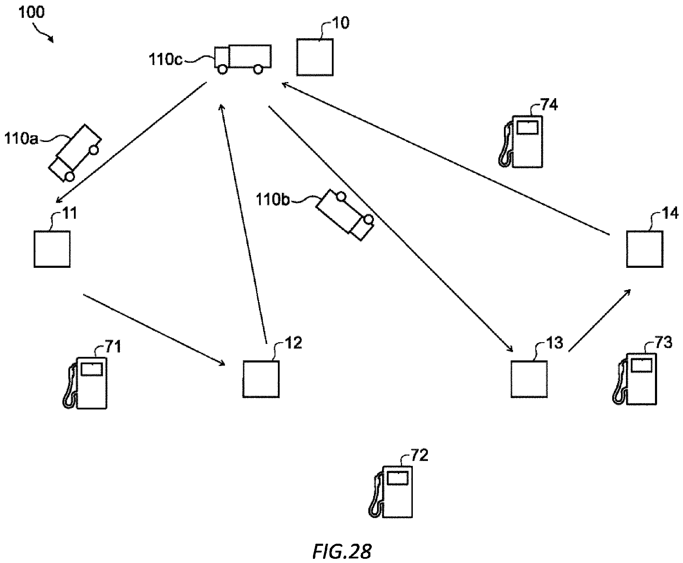

Fig. 28 is a schematic diagram for describing processing of the processing unit 220 in a second embodiment. As described above, the first embodiment is an embodiment in a case where one vehicle 110 is determined to be operated in order of the business establishment 11, the business establishment 12, the business establishment 13, and the business establishment 14. In contrast with this, the second embodiment is an embodiment in a case where two vehicles 110 are allowed to be operated at the same time, in the case where the vehicle 110 is determined to be operated in order of the business establishment 11, the business establishment 12, the business establishment 13, and the business establishment 14.

In the second embodiment, the processing unit 220 decides the operation information and the power transmission/reception information in which the vehicle 110a departs from the base 10, and then returns to the base 10 via the business establishment 11 and the business establishment 12, based on the delivery information and the power demand information. In addition, the processing unit 220 decides the operation information and the power transmission/reception information in which the vehicle 110b departs from the base 10, and returns to the base 10 via the business establishment 13 and the business establishment 14, between the departure of the vehicle 110a from the base 10, and the return of the vehicle 110a to the base 10, based on the delivery information and the power demand information. It should be noted that instead of the operation in the first embodiment in which order of the base 10, the business establishment 11, the business establishment 12, the business establishment 13, the business establishment 14, and the base 10, is determined, in the second embodiment, the operation in order of the base 10, the business establishment 11, the business establishment 12, and the base 10, and the operation in order of the base 10, the business establishment 13, the business establishment 14, and the base 10, are determined to be set, and the processing unit 220 only needs to independently perform the processing of deciding the operation information and the power transmission/reception information, respectively.

It should be noted that in the second embodiment, the processing unit 220 may generate the operation information and the power transmission/reception information generated in which the vehicle 110a departs from the base 10 and then arrives at the business establishment 11; departs from the business establishment 11, and then returns to the base 10 without going via the other business establishments 12 to 14; departs from the base 10, and then arrives at the business establishment 12; and departs from the business establishment 12, and then returns to the base 10 without going via the other business establishments 13 to 14.

The second embodiment may be an embodiment which is applied when the operation information and the power transmission/reception information that meet the delivery information and the power demand cannot be decided by the processing described with reference to the first embodiment. With the second embodiment, it is possible to flexibly respond to the delivery request and a power request to each of the business establishments 11 to 14.

In the first embodiment and the second embodiment, an embodiment may be adopted for the processing unit 220 to give priorities to the power demand in each of the business establishments 11 to 14 over the delivery demand in each of the business establishments 11 to 14, and to decide the operation information and the power transmission/reception information. For example, the processing unit 220 may decide the operation information and the power transmission/reception information for minimizing the amount of power required for the traveling of the vehicle 110 and the amount of power to be received by each of the business establishments 11 to 14 from the system in each of the business establishments 11 to 14, and confirm the operation information and the power transmission/reception information when the delivery information can be met by the operation information. It should be noted that when the delivery information cannot be met by the operation information and the power transmission/reception information, the processing unit 220 may decide the operation information and the power transmission/reception information for minimizing the amount of power for the traveling of the vehicle 110 and the amount of power to be received by each of the business establishments 11 to 14 from the system in each of the business establishments 11 to 14, within a range in which the delivery information is at least met. When both of the delivery information and the power demand cannot be met, the processing unit 220 may decide the operation information and the power transmission/reception information to meet the delivery information in the business establishments 11 to 14, and to meet the power demand of some predetermined business establishment among the business establishments 11 to 14. In addition, when both of the delivery information and the power demand cannot be met, the processing unit 220 may decide the operation information and the power transmission/reception information to meet the delivery information of some predetermined business establishment among the business establishments 11 to 14, within a range in which the power demands of the business establishments 11 to 14 are at least met. When both of the delivery information and the power demand cannot be met, the processing unit 220 may decide the operation information and the power transmission/reception information to at least meet the delivery demand and the power demand of some predetermined business establishment among the business establishments 11 to 14. It should be noted that some predetermined business establishment among the business establishments 11 to 14 may be a predetermined business establishment to be maintained at a time of an emergency such as a power outage or an earthquake occurrence.

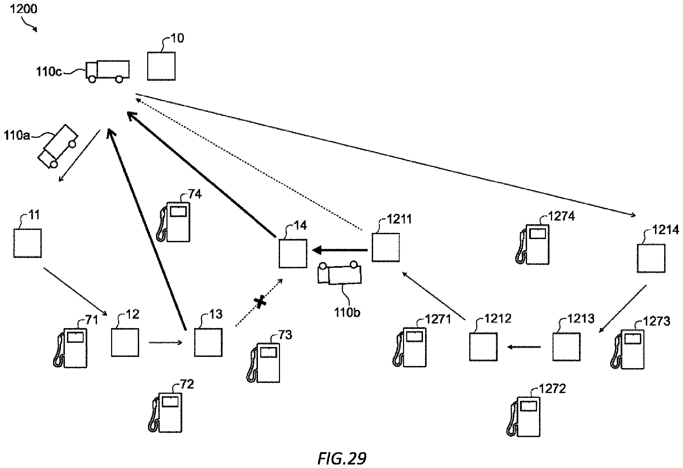

Fig. 29 is a schematic diagram for describing processing of the processing unit 220 in a control system 1200 in a third embodiment. As described above, the first embodiment is the embodiment in the case where one vehicle 110 is determined to be operated in order of the business establishment 11, the business establishment 12, the business establishment 13, and the business establishment 14. In contrast with this, the third embodiment is an embodiment in a case where order of going via the business establishments is not determined. The control system 1200 is described to include a business establishment 1211, a business establishment 1212, a business establishment 1213, a business establishment 1214, a stand 1271, a stand 1272, a stand 1273, and a stand 1274, in addition to the configuration of the first embodiment.

In the third embodiment, the processing unit 220 decides the operation information and the power transmission/reception information in which the vehicle 110a departs from the base 10, and then returns to the base 10 via the business establishment 11, the business establishment 12, the business establishment 13, and the business establishment 14, based on the delivery information and the power demand information. In addition, the processing unit 220 decides the operation information and the power transmission/reception information in which the vehicle 110b departs from the base 10, and then returns to the base 10 via the business establishment 1214, the business establishment 1213, the business establishment 1212, and the business establishment 1211.

In this case, when it is determined that at least one of the delivery information or the power demand information for the business establishment 14 cannot be met, between the departure of the vehicle 110 from the base 10, and the arrival of the vehicle 110a at the business establishment 14, from the latest infrastructure information, the information on the battery for traveling of the vehicle 110a, and the like, the processing unit 220 generates new operation information and power transmission/reception information in which the vehicle 110b departs from the business establishment 1211, and then returns to the base 10 via the business establishment 14. The processing unit 220 may periodically acquire the remaining capacity of the battery for traveling of the vehicle 110b, to generate new operation information and the power transmission/reception information for returning to the base 10 via the business establishment 14 when the power is able to be supplied to exceed the power demands of the business establishment 1214, the business establishment 1213, the business establishment 1212, the business establishment 1211, and the base 10. This makes it possible to enhance a possibility of meeting the delivery information and the power demand information for the business establishment 14.

As described above, with the control systems 100 and 1200 according to each of the embodiments described above, the battery for traveling of the vehicle 110 is used, which makes it possible to meet the delivery demands in the business establishments 11 to 14 outside the base 10, and to perform the energy management in the base 10 and the energy management in the business establishments 11 to 14. This makes it possible to perform the optimal energy management in the base 10 and the business establishments 11 to 14 as a whole.

The vehicle 110 and the vehicle 181 are vehicles as examples of transportation equipment. The vehicle includes at least a battery. The vehicle may include an internal combustion engine which generates a driving force for traveling. The vehicle may include an internal combustion engine which generates power for charging the battery. The vehicle may be an automobile such as an electric vehicle and a fuel cell vehicle (FCV). The automobile includes a bus, a truck, a two-wheeled vehicle, or the like. The vehicle may be a saddle riding type vehicle or the like, or may be a bike. The transportation equipment includes, besides the vehicle, an aircraft including an unmanned aircraft, or equipment such as a ship. The transportation equipment may be any equipment for transporting humans or products. The transportation equipment is an example of the moving body. The moving body is not limited to the transportation equipment, and may be any equipment that can move.

It should be noted that in the embodiment described above, the delivery destinations to which the vehicle 110 delivers the items are the business establishments 11 to 14 for performing the deliveries. However, the delivery destination to which the vehicle 110 delivers the item is not limited to the business establishment. The delivery destination to which the vehicle 110 delivers the item may be a store such as a convenience store. In addition, when the delivery destination of the item from the business establishment 11 is a store or the like where the power transmission/reception from the vehicle 181 is possible, the power control apparatus 41, the integrated management apparatus 51, and the vehicle control apparatus 61 may perform the controls to meet the power demand and the delivery demand of the delivery destination of the item, similar to the controls of the power control apparatus 40, the integrated management apparatus 50, and the vehicle control apparatus 60 described with reference to Fig. 18 to Fig. 29 or the like.

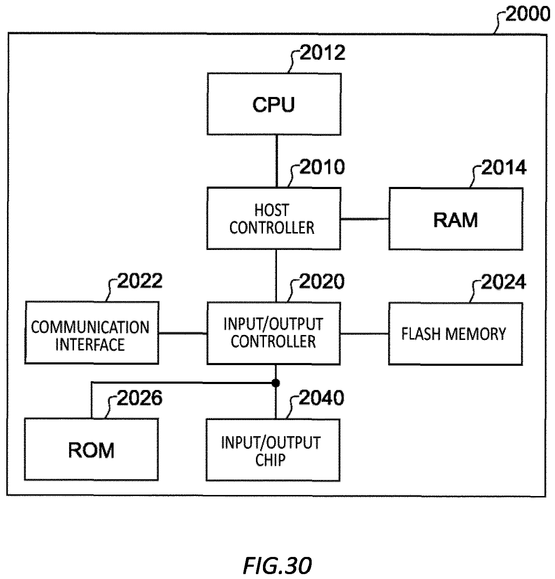

Fig. 30 shows an example of a computer 2000 in which a plurality of embodiments of the present invention can be entirely or partially embodied. A program installed in the computer 2000 can cause the computer 2000 to function as a control system or each unit of the control system, a device such as a control device, or each unit of the device according to the embodiment to execute an operation associated with the system or each unit of the system, the device, or each unit of the device and/or execute a process or a step of the process according to the embodiment. Such a program may be executed by a CPU 2012 in order to cause the computer 2000 to execute a specific operation associated with some or all of the processing procedures and the blocks in the block diagrams described herein.

The computer 2000 according to the present embodiment includes the CPU 2012 and a RAM 2014, which are mutually connected by a host controller 2010. The computer 2000 also includes a ROM 2026, a flash memory 2024, a communication interface 2022, and an input/output chip 2040. The ROM 2026, the flash memory 2024, the communication interface 2022, and the input/output chip 2040 are connected to the host controller 2010 via an input/output controller 2020.

The CPU 2012 operates according to programs stored in the ROM 2026 and the RAM 2014, and thereby controls each unit.

The communication interface 2022 communicates with another electronic device via a network. The flash memory 2024 stores a program and data used by the CPU 2012 in the computer 2000. The ROM 2026 stores a boot program or the like executed by the computer 2000 during activation, and/or a program depending on hardware of the computer 2000. The input/output chip 2040 may also connect various input/output units such as a keyboard, a mouse, and a monitor, to the input/output controller 2020 via input/output ports such as a serial port, a parallel port, a keyboard port, a mouse port, a monitor port, a USB port, a HDMI (registered trademark) port.

A program is provided via a network or a computer-readable storage medium such as a CD-ROM, a DVD-ROM, or a memory card. The RAM 2014, the ROM 2026, or the flash memory 2024 is an example of the computer-readable storage medium. The program is installed in the flash memory 2024, the RAM 2014, or the ROM 2026, and executed by the CPU 2012. Information processing written in these programs is read by the computer 2000, and provides cooperation between the programs and the various types of hardware resources described above. An apparatus or a method may be actualized by executing operations or processing of information depending on a use of the computer 2000.

For example, when a communication is executed between the computer 2000 and an external device, the CPU 2012 may execute a communication program loaded in the RAM 2014, and instruct the communication interface 2022 to execute communication processing based on processing written in the communication program. Under the control of the CPU 2012, the communication interface 2022 reads transmission data stored in a transmission buffer processing region provided in a recording medium such as the RAM 2014 or the flash memory 2024, transmits the read transmission data to the network, and writes reception data received from the network into a reception buffer processing region or the like provided on the recording medium.

In addition, the CPU 2012 may cause all or a necessary portion of a file or a database stored in a recording medium such as the flash memory 2024 to be read into the RAM 2014, and execute various kinds of processing on the data on the RAM 2014. Next, the CPU 2012 writes back the processed data into the recording medium.

Various types of information such as various types of programs, data, a table, and a database may be stored in the recording medium and may be subjected to information processing. The CPU 2012 may execute, on the data read from the RAM 2014, various kinds of processing including various kinds of operations, information processing, conditional judgement, conditional branching, unconditional branching, information retrieval/replacement, or the like described herein and specified by instruction sequences of the programs, and write back a result into the RAM 2014. In addition, the CPU 2012 may retrieve information in a file, a database, or the like in the recording medium. For example, when multiple entries each having an attribute value of a first attribute associated with an attribute value of a second attribute, is stored in the recording medium, the CPU 2012 may retrieve an entry having a designated attribute value of the first attribute that matches a condition from these multiple entries, and read the attribute value of the second attribute stored in this entry, thereby obtaining the attribute value of the second attribute associated with the first attribute that satisfies a predetermined condition.

The programs or software modules described above may be stored in the computer-readable storage medium on the computer 2000 or in the vicinity of the computer 2000. A recording medium such as a hard disk or a RAM provided in a server system connected to a dedicated communication network or the Internet can be used as the computer-readable storage medium. A program stored in the computer-readable storage medium may be provided to the computer 2000 via a network.

The program installed in the computer 2000 to cause the computer 2000 to function as the integrated management apparatus 50 may work on the CPU 2012 or the like to cause the computer 2000 to function as each unit of the integrated management apparatus 50. The information processing described in these programs is read by the computer 2000 to function as each unit of the integrated management apparatus 50 which is specific means by which software and the above-described various hardware resources cooperate. Then, when a calculation or processing of information according to the use purpose of the computer 2000 in the present embodiment is realized by the specific means, the unique integrated management apparatus 50 according to the use purpose is constructed.

The program installed in the computer 2000 to cause the computer 2000 to function as the integrated management apparatus 51 may work on the CPU 2012 or the like to cause the computer 2000 to function as each unit of the integrated management apparatus 51. The information processing described in these programs is read by the computer 2000 to function as each unit of the integrated management apparatus 51 which is specific means by which software and the above-described various hardware resources cooperate. Then, when a calculation or processing of information according to the use purpose of the computer 2000 in the present embodiment is realized by the specific means, the unique integrated management apparatus 51 according to the use purpose is constructed.

Various embodiments have been described with reference to the block diagrams and the like. In the block diagrams, each block may represent (1) a stage of a process in which an operation is executed, or (2) components of the apparatus having a role in executing the operation. A specific stage and component may be implemented by a dedicated circuit, a programmable circuit supplied with computer-readable instructions stored on a computer-readable storage medium, and/or a processor supplied with computer-readable instructions stored on a computer-readable storage medium. The dedicated circuit may include a digital and/or analog hardware circuit, or may include an integrated circuit (IC) and/or a discrete circuit. The programmable circuit may include a reconfigurable hardware circuit including logical AND, logical OR, logical XOR, logical NAND, logical NOR, and another logical operation, and a memory element such as a flip-flop, a register, a field programmable gate array (FPGA), a programmable logic array (PLA), or the like.

The computer-readable storage medium may include any tangible device capable of storing instructions to be executed by an appropriate device. Thereby, the computer-readable storage medium having instructions stored therein forms at least a part of a product including instructions which can be executed to provide means for executing processing procedures or operations specified in the block diagrams. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disk read only memory (CD-ROM), a digital versatile disc (DVD), a Blu-ray (registered trademark) disc, a memory stick, an integrated circuit card, or the like.

The computer-readable instruction may include an assembler instruction, an instruction-set-architecture (ISA) instruction, a machine instruction, a machine dependent instruction, a microcode, a firmware instruction, state-setting data, or either of source code or object code written in any combination of one or more programming languages including an object-oriented programming language such as Smalltalk (registered trademark), JAVA (registered trademark), and C++, and a conventional procedural programming language such as a "C" programming language or a similar programming language.

Computer-readable instructions may be provided to a processor of a general purpose computer, a special purpose computer, or another programmable data processing device, or to programmable circuit, locally or via a local area network (LAN), wide area network (WAN) such as the Internet, and a computer-readable instruction may be executed to provide means for executing operations specified in the described processing procedures or block diagrams. An example of the processor includes a computer processor, processing unit, microprocessor, digital signal processor, controller, microcontroller, or the like.

While the present invention has been described by way of the embodiments, the technical scope of the present invention is not limited to the scope described in the above-described embodiments. It is apparent to persons skilled in the art that various alterations or improvements can be made to the above-described embodiments. It is also apparent from the description of the claims that embodiments added with such alterations or improvements can be included in the technical scope of the present invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: base;
11: business establishment;
12: business establishment;
13: business establishment;
14: business establishment;
20: power generation apparatus;
21: power generation apparatus;
22: power generation apparatus;
23: power generation apparatus;
24: power generation apparatus;
30: stationary battery;
31: stationary battery;
32: stationary battery;
33: stationary battery;
34: stationary battery;
40: power control apparatus;
41: power control apparatus;
42: power control apparatus;
43: power control apparatus;
44: power control apparatus;
50: integrated management apparatus;
51: integrated management apparatus;
52: integrated management apparatus;
53: integrated management apparatus;
54: integrated management apparatus;
61: vehicle control apparatus;
62: vehicle control apparatus;
63: vehicle control apparatus;
64: vehicle control apparatus;
60: vehicle control apparatus;
71: stand;
72: stand;
74: stand;
100: control system;
110: vehicle;
111: delivery destination;
112: delivery destination;
113: delivery destination;
114: delivery destination;
115: delivery destination;
121: area;
122: area;
123: area;
124: area;
140: power control apparatus;
181: vehicle;
200: calculation unit;
210: acquisition unit;
220: processing unit;
280: storage unit;
290: communication unit;
300: calculation unit;
310: acquisition unit;
320: processing unit;
330: mode determination unit;
380: storage unit;
390: communication unit;
1200: control system;
1211: business establishment;
1212: business establishment;
1213: business establishment;
1214: business establishment;
1271: stand;
1272: stand;
1273: stand;
1274: stand;
2000: computer;
2010: host controller;
2012: CPU;
2014: RAM;
2020: input/output controller;
2022: communication interface;
2024: flash memory;
2026: ROM;
2040: input/output chip.

## Claims

1. An integrated management apparatus comprising:
an acquisition unit which acquires (I) a first demand which is sent from an energy management apparatus that manages energy, and which includes an amount of demand, a demand time, and a demand position in relation to an energy demand, and (II) a second demand which is sent from a moving body management apparatus that manages a moving body, and which includes an amount of demand, a demand time, and a demand position in relation to a demand of the moving body;
a processing unit which performs at least one of processing for deciding a position and a time at which the moving body moves, or processing for determining whether both demands of the first demand and the second demand can be met, based on the first demand and the second demand that are acquired by the acquisition unit; and
a mode determination unit which switches between a plurality of modes which includes, as modes for managing the energy and the moving body, a first mode in which the first demand is met to an extent possible while the second demand is met, and a second mode in which the second demand is met to an extent possible while the first demand is met.

2. The integrated management apparatus according to claim 1, wherein
as a mode for managing the energy and the moving body, the mode determination unit determines a mode to be executed in future among the plurality of modes.

3. The integrated management apparatus according to claim 1 or 2, wherein
as the mode for managing the energy and the moving body, the mode determination unit determines a mode to be currently executed, regardless of a mode being executed, among the plurality of modes.

4. The integrated management apparatus according to claim 3, wherein
in a case where the moving body starts moving based on the position and the time at which the moving body moves and which are decided according to the mode determined by the mode determination unit, and then a predetermined emergency condition is met, the mode determination unit determines the mode to be currently executed among the plurality of modes.

5. The integrated management apparatus according to any one of claims 1 to 4, wherein
the first mode is a mode in which the position and the time at which the moving body moves are decided to meet the second demand, and the time at which the moving body moves is adjusted to meet the first demand to the extent possible while meeting the second demand.

6. The integrated management apparatus according to claim 5, wherein
when the first mode is determined by the mode determination unit, the processing unit performs processing of determining whether both demands of the first demand and the second demand can be met, by the moving body moving according to the position and the time at which the moving body moves and which are decided to meet the second demand, and in a case where it is determined that both demands of the first demand and the second demand cannot be met, the processing unit performs processing of adjusting the time at which the moving body moves to meet the first demand to the extent possible while meeting the second demand.

7. The integrated management apparatus according to any one of claims 1 to 6, wherein
the second mode is a mode in which a moving body required to meet the first demand is selected from among the plurality of moving bodies, and in which a moving body other than the moving body selected from among the plurality of moving bodies, is caused to move to meet the second demand to the extent possible.

8. The integrated management apparatus according to claim 7, wherein
when the second mode is determined by the mode determination unit, the processing unit performs processing for selecting the moving body required to meet the first demand from among the plurality of moving bodies, and processing for deciding, to meet the second demand to the extent possible, the position and the time at which the moving body other than the moving body selected from among the plurality of moving bodies, moves.

9. A server comprising:
an acquisition unit which acquires (I) a first demand which is sent from an energy management apparatus that manages energy, and which includes an amount of demand, a demand time, and a demand position in relation to an energy demand, and (II) a second demand which is sent from a moving body management apparatus that manages a moving body, and which includes an amount of demand, a demand time, and a demand position in relation to a demand of the moving body;
a processing unit which performs at least one of processing for deciding a position and a time at which the moving body moves, or processing for determining whether both demands of the first demand and the second demand can be met, based on the first demand and the second demand that are acquired by the acquisition unit; and
a mode determination unit which switches between a plurality of modes which includes, as modes for managing the energy and the moving body, a first mode in which the first demand is met to an extent possible while the second demand is met, and a second mode in which the second demand is met to an extent possible while the first demand is met.

10. A management method comprising:
acquiring a first demand which includes an amount of demand, a demand time, and a demand position in relation to an energy demand;
acquiring a second demand which includes an amount of demand, a demand time, and a demand position in relation to a demand of a moving body;
performing at least one of processing for deciding a position and a time at which the moving body moves, or processing for determining whether both demands of the first demand and the second demand can be met, based on the first demand and the second demand; and
switching between a plurality of modes which includes, as modes for managing the energy and the moving body, a first mode in which the first demand is met to an extent possible while the second demand is met, and a second mode in which the second demand is met to an extent possible while the first demand is met.

11. A program for causing a computer to function as the integrated management apparatus according to any one of claims 1 to 8.

12. A storage medium having stored thereon the program according to claim 11.
